# EUROPEAN PATENT APPLICATION

(11) **EP 4 525 525 A1**
(43) Date of publication of application: **19.03.2025**
(21) Application number: 23819002.9
(22) Date of filing: 31.05.2023
(51) Int. Cl.: H04W 52/02, H04W 74/00

(54) **INFORMATION TRANSMISSION METHOD AND APPARATUS, AND STORAGE MEDIUM**

(30) Priority: 08.06.2022 CN 202210642395
(71) Applicant: ZTE Corporation, Shenzhen, Guangdong 518057 (CN)
(72) Inventor: YUAN, Zhifeng, Shenzhen, Guangdong 518057 (CN); MA, Yihua, Shenzhen, Guangdong 518057 (CN); HU, Liujun, Shenzhen, Guangdong 518057 (CN); XIA, Shuqiang, Shenzhen, Guangdong 518057 (CN); YU, Guanghui, Shenzhen, Guangdong 518057 (CN)
(74) Representative: Savi, Massimiliano
(86) International application number: PCT/CN2023/097510
(87) International publication number: WO 2023/236837

(57) **Abstract**

Provided in the present application are an information transmission method and apparatus, and a storage medium. The method comprises: sending target information to a second communication node at a target sending time, wherein the target sending time is determined according to a pre-stored timing advance, the target information comprises the timing advance and identification information, which is received by a first communication node, and the identification information comprises at least one of the following: cell identification information, base station identification information, beam identification information, and identification information of a wireless signal access point.

## Description

### CROSS-REFERENCE TO RELATED APPLICATION

This application is filed on the basis of Chinese patent application No. 202210642395.X filed June 08, 2022, and claims priority to the Chinese patent application, the entire contents of which are incorporated herein by reference.

### TECHNICAL FIELD

Embodiments of the present disclosure relate to, but not limited to, the field of communication technologies, and in particular, to a method for information transmission and apparatus, and a storage medium.

### BACKGROUND

Integration of Sensing and Communication (ISAC) refers to the integration of communication and sensing functions, such that future communication systems have both communication and sensing functions. In one of ISAC scenarios, it is expected to sense the environment through a wireless signal transmitted by a terminal device.

In another aspect, an important scenario in future wireless communication systems is Internet of Things (IoT) or massive Machine Type Communication (mMTC). In the IoT or mMTC scenario, there is an important type of service that requires the acquisition of the location of a User Equipment (UE).

However, in the related technology, transmission of a wireless signal by the terminal device involves a series of interactive response processes, leading to increased power consumption of the terminal device and increased signaling overheads of the system. Therefore, how to realize the wireless signal transmission of the terminal device while it is important to reduce the signaling overheads.

### SUMMARY

Provided are a method for information transmission, an apparatus, and a storage medium in embodiments of the present disclosure, which can realize information transmission from a first communication node to a second communication node while reducing signaling overheads.

In accordance with a first aspect of the present disclosure, an embodiment provides a method for information transmission, which is applied to a first communication node. The method includes:
- sending target information to a second communication node at a target sending time, where the target sending time is determined according to a pre-stored Timing Advance (TA), the target information includes the TA and identification information received by a first communication node, and the identification information includes at least one of: cell identification information; base station identification information; beam identification information; or Wireless Access Point (WAP) identification information.

In accordance with a second aspect of the present disclosure, an embodiment provides a method for information transmission, which is applied to a second communication node. The method includes:
- receiving target information sent by a first communication node at a target sending time, where the target sending time is determined by the first communication node according to a pre-stored TA, the target information includes the TA and identification information received by the first communication node, and the identification information includes at least one of: cell identification information; base station identification information; beam identification information; or WAP identification information.

In accordance with a third aspect of the present disclosure, an embodiment provides an apparatus for information transmission, which includes: a memory, a processor, and a computer program stored in the memory and executable by the processor, where the computer program, when executed by the processor, causes the processor to implement the method described above.

In accordance with a fourth aspect of the present disclosure, an embodiment provides a computer-readable storage medium, storing a computer-executable instruction which, when executed by a processor, causes the processor to implement the method described above.

In accordance with a fifth aspect of the present disclosure, an embodiment provides a computer program product, which includes a computer program or a computer instruction stored in a computer-readable storage medium, where the computer program or computer instruction, when read from the computer-readable storage medium and executed by a processor of a computer device, causes the computer device to implement the method described above.

The method according to an embodiment of the present disclosure include: sending target information to a second communication node at a target sending time, where the target sending time is determined according to a pre-stored TA, the target information includes the TA and identification information received by a first communication node, and the identification information includes at least one of: cell identification information; base station identification information; beam identification information; or WAP identification information. In other words, the first communication node can determine the target sending time according to the pre-stored TA, and send the target information to the second communication node at the target sending time. Thereby, the first communication node does not need to acquire the TA from the second communication node, and therefore does not need to perform a series of interactive response processes with the second communication node, such that signaling overheads caused by the interactive response processes are avoided. In addition, the second communication node can determine the location of the first communication node according to the identification information in the target information. Therefore, the embodiments of the present disclosure can realize information transmission from a first communication node to a second communication node while reducing signaling overheads.

### BRIEF DESCRIPTION OF DRAWINGS

FIG. 1 is a schematic diagram of acquiring location information of a terminal device according to an embodiment of the present disclosure;
FIG. 2 is a schematic diagram of monitoring weather condition information according to an embodiment of the present disclosure;
FIG. 3 is a schematic diagram of monitoring sandstorm information according to an embodiment of the present disclosure;
FIG. 4 is a flowchart of a method for information transmission according to an embodiment of the present disclosure;
FIG. 5 is a flowchart of an implementation of operation S110 in FIG. 4;
FIG. 6 is a flowchart of another implementation of operation S110 in FIG. 4;
FIG. 7 is a schematic diagram of a pilot position relationship according to an embodiment of the present disclosure;
FIG. 8 is a schematic diagram of another pilot position relationship according to an embodiment of the present disclosure;
FIG. 9 is a schematic diagram of another pilot position relationship according to an embodiment of the present disclosure;
FIG. 10 is a schematic diagram of a pilot sequence according to an embodiment of the present disclosure;
FIG. 11 is a schematic diagram of another pilot sequence according to an embodiment of the present disclosure;
FIG. 12 is a flowchart of another implementation of operation S110 in FIG. 4;
FIG. 13 is a schematic diagram of two independent pilots according to an embodiment of the present disclosure;
FIG. 14 is a schematic diagram of *w* number of independent pilots according to an embodiment of the present disclosure;
FIG. 15 is a schematic diagram of a preset pilot set according to an example of the present disclosure;
FIG. 16 is a schematic diagram of a preset pilot set according to another example of the present disclosure;
FIG. 17 is a schematic diagram of another preset pilot set according to another example of the present disclosure;
FIG. 18 is a flowchart of another implementation of operation S110 in FIG. 4;
FIG. 19 is a flowchart of a method for information transmission according to another embodiment of the present disclosure;
FIG. 20 is a flowchart of an implementation of operation S610 in FIG. 19;
FIG. 21 is a flowchart of a method for information transmission according to another embodiment of the present disclosure;
FIG. 22 is a flowchart of a method for information transmission according to another embodiment of the present disclosure;
FIG. 23 is a schematic diagram of a preset pilot set according to another example of the present disclosure;
FIG. 24 is a schematic diagram of another preset pilot set according to another example of the present disclosure;
FIG. 25 is a schematic diagram of a defined Physical Resource Block (PRB) according to an embodiment of the present disclosure;
FIG. 26 is a schematic diagram of a defined Demodulation Reference Signal (DMRS) according to an embodiment of the present disclosure;
FIG. 27 is a schematic diagram of distinguishing different reference signal ports by Orthogonal Cover Codes (OCCs) according to an embodiment of the present disclosure;
FIG. 28 is a schematic diagram of a DMRS defined using an OCC according to an embodiment of the present disclosure;
FIG. 29 is another schematic diagram of a DMRS defined using an OCC according to an embodiment of the present disclosure;
FIG. 30 is another schematic diagram of a DMRS defined using an OCC according to an embodiment of the present disclosure;
FIG. 31 is a schematic diagram of a PRB-based transmission according to an embodiment of the present disclosure;
FIG. 32 is another schematic diagram of a defined DMRS according to an embodiment of the present disclosure;
FIG. 33 is another schematic diagram of a defined DMRS according to an embodiment of the present disclosure;
FIG. 34 is another schematic diagram of a defined DMRS according to an embodiment of the present disclosure;
FIG. 35 is a constellation diagram of a Binary Phase Shift Keying (BPSK) symbol according to an embodiment of the present disclosure;
FIG. 36 is another constellation diagram of a BPSK symbol according to an embodiment of the present disclosure;
FIG. 37 is another constellation diagram of a BPSK symbol according to an embodiment of the present disclosure;
FIG. 38 is a schematic diagram of a defined reference signal according to an embodiment of the present disclosure;
FIG. 39 is another schematic diagram of a defined reference signal according to an embodiment of the present disclosure;
FIG. 40 is another schematic diagram of a defined reference signal according to an embodiment of the present disclosure;
FIG. 41 is a schematic diagram of generating a DMRS port according to an embodiment of the present disclosure;
FIG. 42 is another schematic diagram of a defined reference signal according to an embodiment of the present disclosure;
FIG. 43 is another schematic diagram of a defined reference signal according to an embodiment of the present disclosure;
FIG. 44 is a schematic diagram of a very sparse reference signal according to an embodiment of the present disclosure; and
FIG. 45 is a schematic diagram of an apparatus for information transmission according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although logical orders have been shown in the flowcharts, in some cases, the operations shown or described may be executed in an order different from the orders as shown in the flowcharts. In the description, claims, and the accompanying drawings, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first" and "second" are merely used for distinguishing technical features, and are not intended to indicate or imply relative importance, or implicitly point out the number of the indicated technical features, or implicitly point out the order of the indicated technical features.

The present disclosure provides a method for information transmission , an apparatus, and a storage medium. The method includes: sending, by a first communication node, target information to a second communication node at a target sending time, where the target sending time is determined according to a pre-stored TA, the target information includes the TA and identification information received by the first communication node, and the identification information includes at least one of: cell identification information; base station identification information; beam identification information; or WAP identification information. In other words, the first communication node can determine the target sending time according to the pre-stored TA, and send the target information to the second communication node at the target sending time. As such, the first communication node does not need to acquire the TA from the second communication node, and therefore does not need to perform a series of interactive response processes with the second communication node, such that signaling overheads caused by the interactive response processes are avoided. In addition, the second communication node can determine the location of the first communication node according to the identification information in the target information, such that the second communication node can implement an application based on the location of the first communication node. Therefore, the embodiments of the present disclosure can realize location information transmission from a first communication node to a second communication node while reducing signaling overheads.

The embodiments of the present disclosure will be further described in detail below in conjunction with the accompanying drawings.

In an embodiment, future wireless communication systems may include the following three requirements.

One: requirement for ISAC, e.g., constructing a high-precision three-dimensional environment map by acquiring channel information involved in the process of communication signal transmission; detecting rainfall, sandstorm, chemical gas concentration, etc.; detecting road conditions; or realizing security functions through communication signals.

Two: requirement for improving the performance of the communication system, to, for example, enable the system to more easily and accurately realize multi-user pairing and scheduling, and more easily realize beamforming, base station energy saving, etc.

Three: To better support IoT/mMTC.

In an aspect, future wireless communication systems have the requirement for ISAC. If the system can obtain the location information of a large number of terminal devices (i.e., UEs), and can also obtain channel information of a channel through which a wireless signal transmitted by each of the terminal devices passes (i.e., obtain channel information of a channel through which an electromagnetic wave transmitted at the location of the terminal device reaches a base station), the system can use the location information and the channel information to implement many operations, for example, constructing an environment map; monitoring rainfall, snowfall and other weather conditions, especially heavy rain and snowstorm weather, in real time; monitoring sand storm, dust, chemical gases, etc., in real time; monitoring the traffic volume such as the number of pedestrians and the number of vehicles, which may be used to assist traffic control or public governance; sensing the number of terminal devices in a place, to realizing a security function through communication signals; or realizing base station energy saving, load balancing, etc.

In another aspect, future wireless communication systems also need to better support IoT/mMTC. When the system can obtain location information of a large number of terminal devices, the quality of IoT services, such as asset tracking, logistics management, and child/elderly/pet loss prevention services, can be improved.

It should be noted that before the technical schemes disclosed in the embodiments of the present disclosure are used, the user should be informed of the type, usage scope, usage scenario, etc., of personal information involved in the present disclosure in an appropriate manner in accordance with relevant laws and regulations, and the data cannot be used without authorization of the user. In other words, the acquisition, storage, use, processing, etc., of the data in the technical scheme of the present disclosure are in compliance with relevant provisions of laws and regulations. For example, the acquisition, storage, use, processing, etc., of the location information of the terminal devices in the present disclosure are in compliance with relevant provisions of laws and regulations.

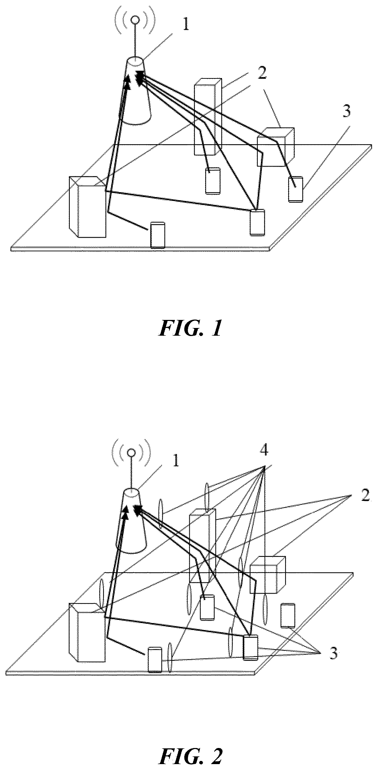

In an embodiment, as shown in FIG. 1, reference number"1" denotes a base station, reference number"2" denotes a person or an object such as a building or a vehicle, and reference number "3" denotes terminal devices. The base station 1 can acquire location information of the terminal devices 3 at different locations (e.g., location 1, location 2, ..., location K), and can also acquire channel information of channels through which wireless signals transmitted by the terminal devices 3 pass (e.g., channel 1, channel 2, ..., channel K).

In an embodiment, as shown in FIG. 2, reference number"1" denotes a base station, reference number"2" denotes a person or an object such as a building or a vehicle, reference number"3" denotes terminal devices, and reference number"4" denotes rain and snow. The base station 1 can acquire location information of the terminal devices 3 at different locations (e.g., location 1, location 2, ..., location K), and can sense corresponding rain and snow weather conditions according to the location information of the terminal devices 3.

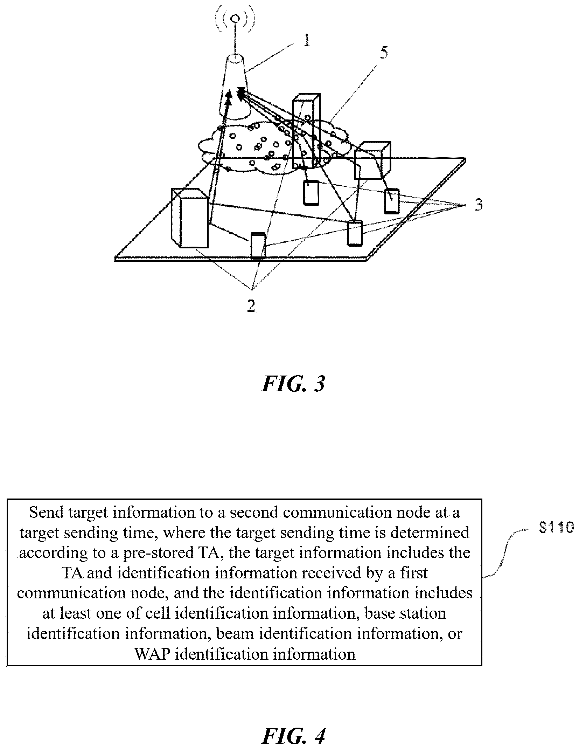

In an embodiment, as shown in FIG. 3, reference number" 1" denotes a base station, reference number"2" denotes a person or an object such as a building or a vehicle, reference number"3" denotes terminal devices, and reference number"5" denotes sandstorm. The base station 1 can acquire location information of the terminal devices 3 at different locations (e.g., location 1, location 2, ..., location K), and can sense corresponding sandstorm conditions according to the location information of the terminal devices 3.

However, transmission of location-related information by the terminal device increases the power consumption of the terminal device. Therefore, most of users of the terminal devices may be reluctant to "transmit the location-related information". For example, if the function of "transmit the location-related information" is optional, many users will disable this function. This greatly reduces the number of terminal devices that can provide location information, and consequently degrades the performance of related schemes that rely on "location information and its corresponding wireless channel information (where the wireless channel information is channel information of a channel through which a wireless signal transmitted by the terminal device passes)".

In addition, the terminal device cannot transmit traditional location information in some scenarios. For example, an indoor terminal device cannot be positioned by satellite positioning, and therefore cannot send location information. Such scenarios also greatly reduce the number of terminal devices that can provide location information, and consequently degrade the performance of related schemes that rely on "location and its corresponding wireless channel information".

Therefore, some measures can be taken to greatly alleviate the problems faced by terminal devices transmitting location-related information. First, for a scenario where the terminal device cannot directly send the location information, the terminal device may transmit received identification information to the base station. The base station determines the location of the terminal device according to the identification information. The identification information includes at least one of cell identification information, base station identification information, beam identification information, or WAP identification information. The WAP identification information includes any one of cell-free communication system Access Point (AP) identification information, WLAN (WLAN) AP identification information, wireless wide area network (WWAN) AP identification information, or Bluetooth AP identification information.

Further, when the identification information includes the cell identification information, the target information further includes a received wireless signal strength of the cell identification information received by the first communication node. Alternatively, when the identification information includes the base station identification information, the target information further includes a received wireless signal strength of the base station identification information received by the first communication node. Alternatively, when the identification information includes the beam identification information, the target information further includes a received wireless signal strength of the beam identification information received by the first communication node. Alternatively, when the identification information includes the WAP identification information, the target information further includes a received wireless signal strength of the WAP identification information received by the first communication node.

Still further, when the identification information includes the cell identification information, the cell identification information includes cell identifiers of a plurality of cells. Alternatively, when the identification information includes the base station identification information, the base station identification information includes base station identifiers of a plurality of base stations. Alternatively, when the identification information includes the beam identification information, the beam identification information includes beam identifiers of a plurality of beams. Alternatively, when the identification information includes the WAP identification information, the WAP identification information includes identifiers of a plurality of WAPs.

Described below is the implementation of information transmission from the first communication node (such as a terminal device) to the second communication node (such as a base station) while reducing signaling overheads.

In the related technology, when a terminal device performs uplink information transmission or uplink data transmission, the terminal device (i.e., the UE) needs to be in a connected state. The connected state may also be referred to as a Radio Resource Control (RRC) connected state. However, the terminal device in the connected state usually does not have a dedicated uplink transmission resource, so the terminal device in the connected state needs to request an uplink transmission resource from the base station before transmitting information each time. Only after obtaining an uplink resource grant from the base station, the terminal device in the connected state can transmit information over a time-frequency resource specified by the base station. It can be seen that in order to complete an uplink information transmission, the terminal device needs to complete many operations in advance. Therefore, if the terminal device is required to follow the uplink information transmission mechanism in the related technology to transmit the received identification information, the power consumption of the terminal device and the signaling overheads of the system will be increased.

The above situation is further analyzed below.

First, to save power, the terminal device transmits the received identification information at a very low frequency, for example, once per several seconds, tens of seconds, or even several minutes. When there is no need to transmit the received identification information, the terminal device usually is in an idle state or inactive state of deep sleep to save power. In other words, the terminal device usually does not enter the connected state (i.e., is not in the connected state) to save power. The terminal device needs to perform some operations to enter the connected state or maintain the connected state, leading to increased power consumption of the terminal device, while the terminal device in the unconnected state (i.e., idle state or inactive state) does not need to perform such operations, so power can be saved.

In other words, when the terminal device does not need to transmit the received identification information, the terminal device is not connected to (i.e., is disconnected from) the system, i.e., the terminal device is in the unconnected state (where may also be referred to as a non-connected state, non-RRC-connected state, connectionless state, connection-free state, or disconnected state, etc.). It can be understood that the idle state or inactive state may be regarded as being equivalent to the unconnected state, or the idle state or inactive state may be regarded as a type of unconnected state.

When the terminal device is originally in the unconnected state (i.e., has not entered the connected state or has not established a connection with the system), the terminal device, if following an uplink data transmission scheme in the related technology, needs to establish a connection with the system before transmission of the received identification information. The terminal device can further request an uplink transmission resource from the system (such as a base station or an AP) after entering the connected state (also referred to as the active state), and can transmit the received identification information only after obtaining a resource grant or resource scheduling from the system. The terminal device needs to perform a random access process to enter the connected state from the unconnected state. This process requires multiple interaction processes between the terminal device and the base station. For example, the terminal device sends a preamble; the base station returns a Random Access Response (RAR); the terminal device sends Layer 2 (L2) or Layer 3 (L3) control information; and the base station sends Message 4 (Msg4). This random access process inevitably increases the power consumption generated when the terminal device transmits location information.

Further, if the uplink data transmission scheme in the related technology is followed, when the number of terminal devices transmitting the received identification information is large and the large number of terminal devices all need to enter the connected state before transmission, the large number of terminal devices perform the random access process and request an uplink resource grant. This increases the probability of collision or congestion in the random access process. As a result, most terminal devices need to perform random access multiple times before entering the connected state, and consequently the terminal devices consume more energy and signaling in order to transmit the received identification information. It can be seen that the uplink data transmission scheme in the related technology is not suitable for an application scenario where a large number of terminal devices transmit the received identification information.

In this embodiment, in the related technology, there is an uplink data transmission method, i.e., Semi-Persistent Scheduling (SPS), which aims to reduce the overheads and time delay of physical control signaling of small data packet services, and is very suitable for periodic services, such as Voice over Internet Protocol (VoIP). The data rate of VoIP during a talk spurt is basically constant. For example, the average duration of each talk spurt is 1s to 2s, and one voice packet is generated every 20 ms, so each talk spurt contains 50 to 100 voice packets. The small-scale fading between the voice packets is compensated by closed-loop power control to ensure that the Signal to Noise Ratio (SNR) of the signal on the receiving side can be kept constant. Therefore, the Modulation and Coding Scheme (MCS) can remain unchanged during this period. The allocated physical resources may remain unchanged, or may hop according to a fixed rule. Therefore, no dynamic signaling is needed during uplink information or data transmission. In addition, SPS may be regarded as an enhanced form of semi-static configuration, and is mainly used for periodic small packet services with constant packet size. Moreover, SPS usually operates in the connected state (RRC Connected), i.e., the state where the terminal device has completed the random access process. Although the frequency of scheduling is far lower than the frequency of data packets, SPS is basically non-contention based, and no resource collision occurs between different terminal devices, e.g., no reference signal or pilot collision occurs. In a 5th Generation Mobile Communication Technology (5G) system, evolved SPS can be used in an Ultra Reliable Low Latency Communication (URLLC) scenario, to improve reliability, and reduce the latency of the terminal device side. In this case, SPS is referred to as Configured Grant, i.e., pre-configured resource grant. Configured Grant can also be used as a special grant-free method or scheduling-free method, and because it can eliminate the need of "dynamic grant request" or "dynamic scheduling request" for each uplink data transmission, it is essentially "dynamic grant-free" or "dynamic scheduling-free". It can be understood that in the SPS-type "dynamic scheduling-free" method, transmission resources of different terminal devices are essentially pre-configured by the base station, and are not acquired by the terminal devices through a "contention-based mode", so the SPS-type "dynamic-free scheduling" is "non-contention based". More importantly, for such non-contention-based scheduling-free method, reference signals may be pre-configured by the base station to avoid "collision". For example, it can be ensured through pre-configuration of the base station that reference signals of terminal devices transmitted on the same time-frequency resource are orthogonal.

Although the pre-configured scheduling-free method such as SPS or Configured Grant can reduce the overheads of physical control signaling in uplink transmission, the spectral efficiency of the system is still very low if the SPS method is used to realize the transmission of received identification information by a large number of terminal devices. For example, if a terminal device has requested and obtained a periodic transmission resource in a cell for a period of time, but the terminal device is handed over from the cell to a new cell during this process, the terminal device needs to request the new cell for a new pre-configured transmission resource, and instruct the source cell to release the transmission resource pre-configured for the terminal device. It is a complicated process for the terminal device to request the new cell for a new transmission resource, and the terminal device usually needs to perform a random access process in the new cell, leading to increased power consumption of the terminal device and increased signaling overheads of the system. In order to save power in the scenario where the terminal device transmits the received identification information, the terminal device does not frequently transmit the received identification information, i.e., transmits location information at long time intervals. Therefore, in order to improve efficiency, the interval between pre-configured resources is usually relatively long, which means that the adverse effects caused by cell handover will be significantly increased, significantly reducing the spectral efficiency of the system and increasing the complexity of the system. Even terminal devices or nodes whose location has not changed are prone to changes in their surrounding environment over a long period of time, especially for terminal devices or nodes at the edge of the cell, leading to cell handover.

Based on the above analysis, it can be seen that although the SPS pre-configuration mechanism can also realize simple uplink transmission, it is not suitable for the application scenario where a large number of terminal devices transmit the received identification information.

In another aspect, in a wireless communication system, such as a Long Term Evolution (LTE) or New Radio (NR) system, an important feature of uplink transmission is that the time of arrival of signals transmitted by different terminal devices at the base station is basically aligned, or synchronized. In other words, the base station requires that the time of arrival of signals from different UEs at the base station be within a range of a Cyclic Prefix (CP) of an Orthogonal Frequency Division Multiplexing (OFDM) symbol. However, different terminal devices are distributed at different geographic locations, for example, some terminal devices are close to the base station and some terminal devices are far away from the base station, thus transmission delays of signals transmitted by different terminal devices to the base station are different. A wireless signal transmitted by a terminal device far away from the base station to the base station has a large transmission delay. In the wireless communication system, the base station may require that the delays of signals from different UEs to the base station be within the range of the CP of the OFDM symbol. Therefore, different terminal devices need to have different advances when transmitting signals. Therefore, in the present disclosure, the wireless communication system may adopt an Uplink Timing Advance (UTA) mechanism. The related UTA mechanism is as follows.
(1) The terminal device sends a signal first.
(2) The base station estimates a transmission delay according to the signal, and then estimates a TA.
(3) The base station notifies the terminal device of the TA through signaling which is usually referred to as a Timing Advance Command (TAC).
(4) To transmit target information to the base station, the terminal device determines a time at which the target information is sent according to the TA, i.e., the terminal device advances the time at which the target information is sent according to the TA value, which is equivalent to that the base station indicates the TA value, such that the target information arrives at the base station without further delay after going through the transmission delay.

According to the UTA mechanism, in order to obtain the TA of the signal to be sent, the terminal device needs to perform a series of interactive processes with the base station. However, the terminal device in the unconnected state does not send any signal before transmitting the target information. The base station cannot determine a corresponding TA by measuring a signal sent from the terminal device, and therefore cannot send a TAC to the terminal device. Thus, it can be seen that according to the above UTA mechanism, the terminal device transmitting the target information in the unconnected state cannot obtain the TA, so there will be a large transmission delay when the terminal device transmits the target information, increasing the difficulty of demodulating the target information by the base station. This is because the base station needs to estimate different transmission delays of signals from different terminal device, and then perform correct compensation and demodulate and decode the signals.

In view of the above situation, an embodiment of the present disclosure proposes a method in which a terminal device independently determines a TA of a signal transmitted by the terminal device.

In an embodiment, the TA for transmission by the first communication node is determined based on a broadcast signal from the second communication node.

In this embodiment, the first communication node (i.e., the terminal device) may determine, according to the broadcast signal from the second communication node (i.e., the base station), the TA for transmission by the first communication node. The method to determine the TA based on the broadcast signal is not particularly limited here. For example, the base station may broadcast location information corresponding to the base station. Then, the terminal device may calculate a distance between the terminal device and the base station according to the location information of the base station and the location information of the terminal device, and determine a transmission delay (i.e., the transmission latency) of a signal of the terminal device according to the distance, so as to determine a TA required for the signal to be transmitted by the terminal device.

In an embodiment, the broadcast signal from the second communication node includes a downlink synchronization signal or a downlink reference signal.

In this embodiment, the broadcast signal from the second communication node may include a downlink synchronization signal or a downlink reference signal. For example, the second communication node broadcasts the downlink synchronization signal or the downlink reference signal, and the first communication node may calculate a strength of the downlink synchronization signal or the downlink reference signal and estimate a TA according to the strength of the signal. After independently determining the TA (i.e., the TA estimated by the first communication node according to the strength of the downlink synchronization signal or the downlink reference signal), the first communication node may transmit the transmission signal in advance according to the TA, i.e., the TA for transmission by the first communication node is deemed as a TA independently determined by the first communication node.

However, because the value of TA is determined independently by the first communication node, the second communication node cannot know the TA for transmission by the first communication node even if the second communication node correctly demodulates and decodes the target information from the first communication node, cannot know the transmission delay experienced by the target information transmitted by the first communication node, and cannot realize the sensing of the transmission environment according to the target information from the first communication node. Therefore, the first communication node (i.e., the terminal device) may transmit the target information including the received identification information and the TA to the second communication node (i.e., the base station). The second communication node may obtain the TA for transmission by the first communication node after correctly demodulating and decoding the target information from the first communication node. The second communication node may estimate a multipath channel according to the wireless signal corresponding to the target information received from the first communication node, then combine the TA with the multipath channel to obtain a transmission delay of all paths through which the target information sent by the first communication node to the second communication node passes, and then calculate a transmission distance of the target information according to the transmission delay. As such, the sensing of the transmission environment is realized.

Further, the sending time at which the target information is transmitted to the second communication node may be determined according to the TA. The method to determine the sending time according to the TA is not particularly limited herein.

In an embodiment, the TA for transmission by the first communication node may be a numerical value. The TA may be expressed by means of one or more bits. For example, a time period from 0 to a maximum TA (e.g., defined as *TAmax*) may be divided into *2^{D}* (i.e., 2 to the power of *D*) number of parts, where any TA within the range from 0 to the maximum TA may be expressed by means of D bits, i.e., the TA independently determined by the first communication node may be one of *2^{D}* number of values. The first communication node may send out the target information in advance according to the TA, i.e., determine the sending time at which the target information is sent according to the TA, and may place the D bits corresponding to the TA into the target information for coding and modulation, and then transmit the same to the second communication node. After demodulating and decoding the target information from the first communication node correctly, the second communication node may obtain, according to the D number of bits corresponding to the TA, and thus the TA for transmission by the first communication node.

FIG. 4 is a flowchart of a method for information transmission according to an embodiment of the present disclosure. The method is applied to a first communication node. The method may include, but not limited to, a following operation S110.

At operation S110, target information is sent to a second communication node at a target sending time, where the target sending time is determined according to a pre-stored TA. The target information includes the TA and identification information received by a first communication node. The identification information includes at least one of cell identification information, base station identification information, beam identification information, or WAP identification information.

In a feasible implementation, when the identification information includes the cell identification information, the cell identification information may include cell identifiers of a plurality of cells. Alternatively, when the identification information includes the base station identification information, the base station identification information may include base station identifiers of a plurality of base stations. Alternatively, when the identification information includes the beam identification information, the beam identification information may include beam identifiers of a plurality of beams. Alternatively, when the identification information includes the WAP identification information, the WAP identification information may include identifiers of a plurality of WAPs, which is not particularly limited herein. For example, the first communication node finds cell identifiers of a plurality of cells and transmits the cell identifiers of the plurality of cells to the second communication node, and the second communication node may determine the location of the first communication node according to the cell identifiers from the first communication node. The larger the number of cell identifiers is, the more accurate the location of the first communication node obtained by the second communication node is. For another example, assuming that the second communication node is equipped with a plurality of antennas, the second communication node may further transmit a signal through a beam; the first communication node may search for a beam identifier of the second communication node, and send target information including the beam identifier to the second communication node; and the second communication node can more accurately acquire the location of the first communication node according to the beam identifier. For another example, in some scenarios, the first communication node may also be arranged in other wireless communication systems. In this case, the first communication node may obtain an identifier of an access point of the system (i.e., identifiers of a plurality of WAPs), and then may send target information including the identifiers of the plurality of WAPs to the second communication node, and the second communication node determines the location of the first communication node according to the identifiers of the plurality of WAPs from the first communication node. This is not particularly limited in the embodiments of the present disclosure.

In a feasible implementation, the WAP may be a WLAN router, and the WLAN router may be a wireless fidelity (Wi-Fi) router, which is not particularly limited herein.

In a feasible implementation, the identification information may be a Media Access Control (MAC) address, an Internet Protocol (IP) address, a port number, a Service Set Identifier (SSID), a device code, or other information that can uniquely identify a wireless communication device, etc. The device code may be an International Mobile Equipment Identity (IMEI), a Mobile Equipment Identifier (MEID), or the like, and the present disclosure is not limited thereto.

In a feasible implementation, when the identification information includes WAP identification information, the WAP identification information may include any one of cell-free communication system AP identification information, WLAN AP identification information, WWAN AP identification information, or Bluetooth AP identification information, which is not particularly limited herein. For example, if the first communication node is in a WLAN (such as a Wi-Fi system), the first communication node may acquire identification information of a WLAN router (such as a Wi-Fi router), where the identification information may be a MAC address of the router. Then, the first communication node sends target information including the MAC address of the router to the second communication node, to allow the second communication node to determine the location of the first communication node according to the MAC address of the router. For another example, if the first communication node is in a cell-free communication system, the first communication node may obtain cell-free communication system AP identification information, and then the first communication node may send target information including the cell-free communication system AP identification information to the second communication node, to allow the second communication node to determine the location of the first communication node according to the cell-free communication system AP identification information. For another example, if the first communication node is in a Bluetooth wireless communication system, the first communication node may obtain Bluetooth AP identification information, and then the first communication node may send target information including the Bluetooth AP identification information to the second communication node, to allow the second communication node determines the location of the first communication node according to the Bluetooth AP identification information. The present disclosure is not limited to the embodiment described here.

In a feasible embodiment, the TA may be determined according to a broadcast signal sent by the second communication node, and the broadcast signal may include a downlink synchronization signal or a downlink reference signal, and the present disclosure is not limited thereto. For example, the second communication node may send a broadcast signal to notify the first communication node of the location of the second communication node, and then the first communication node can calculate a distance between the first communication node and the second communication node according to the location of the second communication node and the location of the first communication node, determine a transmission delay of the target information, and determine a TA required for transmitting the target information. For another example, the second communication node sends a downlink synchronization signal or a downlink reference signal to the first communication node, and the first communication node may calculate a strength of the downlink synchronization signal or a strength of the downlink reference signal, estimate a TA according to the strength, and after independently determining the TA, send the target information to the second communication node according to the TA. The present disclosure is not limited to the embodiment described here.

In a feasible implementation, when the identification information includes the cell identification information, the target information further includes a received wireless signal strength of the cell identification information received by the first communication node. Alternatively, when the identification information includes the base station identification information, the target information further may further include a received wireless signal strength of the base station identification information received by the first communication node. Alternatively, when the identification information includes the beam identification information, the target information further may further include a received wireless signal strength of the beam identification information received by the first communication node. Alternatively, when the identification information includes the WAP identification information, the target information further includes a received wireless signal strength of the WAP identification information received by the first communication node. According to the strength information of the wireless signals corresponding to the identification information, the second communication node can more accurately determine the location of the first communication node. The strength of all the above wireless signals may be a received signal strength indication, and the present disclosure is not limited thereto.

In a feasible implementation, the target information may further include geomorphological information, climate information, gas concentration information (such as chemical gas concentration information), road condition information, security information, etc. The climate information may include illumination information, temperature information, precipitation information, wind information, sandstorm information, and the like, which will not be enumerated herein.

In this embodiment, with the method for information transmission including the S110, a first communication node sends target information to a second communication node at a target sending time. The target sending time is determined according to a pre-stored TA. The target information includes the TA and identification information received by the first communication node. The identification information includes at least one of: cell identification information; base station identification information; beam identification information; or WAP identification information. In other words, the first communication node can determine the target sending time according to the pre-stored TA, and send the target information to the second communication node at the target sending time. As such, the first communication node does not need to acquire the TA from the second communication node, and therefore does not need to perform a series of interactive response processes with the second communication node, such that signaling overheads caused by the interactive response processes are avoided. In addition, the second communication node is allowed to estimate a multipath channel according to the target information, combine the TA in the target information with the multipath channel through which the target information passes to determine a transmission delay of all paths through which the target information sent by the first communication node to the second communication node passes, and calculate a transmission distance according to the transmission delay of all paths. Because the first communication node can determine the target sending time according to the pre-stored TA, and send the target information to the second communication node at the target sending time, the delay of the target information arriving at the second communication node can be reduced, thereby reducing the difficulty of demodulating the target information by the second communication node. Therefore, the embodiments of the present disclosure can realize information transmission from a first communication node to a second communication node while reducing signaling overheads.

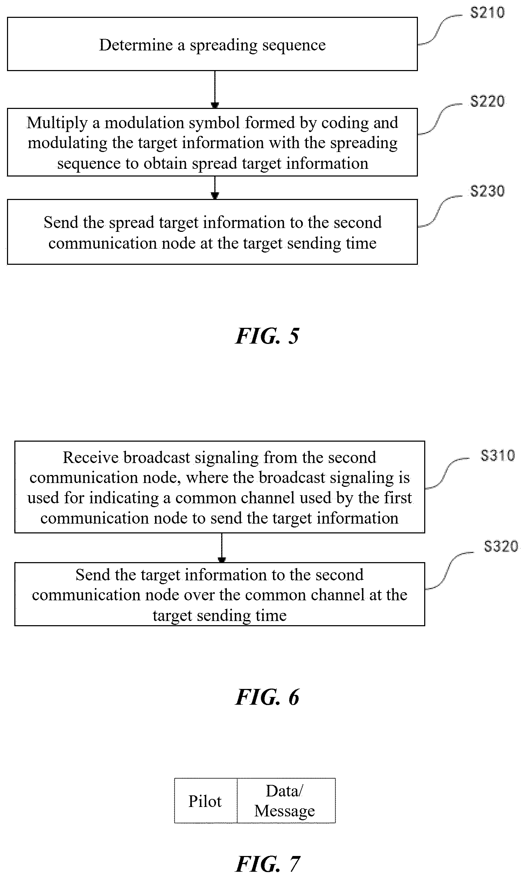

In an embodiment, as shown in FIG. 5, S110 is further described. S110 may include, but not limited to, the following operations S210, S220, and S230.

At operation S210, a spreading sequence is determined.

At operation S220, a modulated symbol formed by encoding and modulating the target information is multiplied with the spreading sequence to obtain spread target information.

At operation S230, the spread target information is sent to the second communication node at the target sending time.

In this embodiment, because the second communication node (such as a base station) may receive a large amount of target information including at least the received identification information and the TA from different first communication nodes (such as terminal devices) over the same time-frequency resource, and the transmission of the large amount of target information is contention-based, resource collision may occur. In order to solve the above problems, the modulation performance for the target information may be optimized. For example, the target information including at least the received identification information and the TA may be encoded and modulated first to form corresponding modulated symbols. Then, each modulated symbol is spread by means of a spreading sequence to obtain spread target information. For example, each modulated symbol may be spread into a symbol of a length L by means of a spreading sequence of the length L. The method in which the spreading is performed is not particularly limited here. For example, assuming that an *n*^{th} modulated symbol before spreading is *sₙ*, and the spreading sequence of the length *L* is [*c₁,c₂,...c_{L}*], spreading *sₙ* may be multiplying *sₙ* by each element of the spreading sequence to obtain *L* number of spread symbols, i.e., [*sₙ*×*c₁,sₙ*×*c₂,...,sₙ*×*c_{L}*]. Finally, the spread target information may be transmitted to the corresponding second communication node.

In a feasible embodiment, the spreading sequence may be determined according to the target information. Alternatively, the spreading sequence may be determined in a preset sequence set according to a first number of pieces of bit information in the target information, where the preset sequence set includes a second number of spreading sequences, the first number and the second number are correlated by a logarithmic function, and the logarithmic function is a logarithmic function with a base of 2. For example, if the second number is defined as *V,* the first number is *log₂V*, and the present disclosure is not limited thereto.

It can be understood that if the spread target information is transmitted in frequency domain, the diversity effect of modulated symbols can be improved. If the transmission power of the spread target information is limited, and the spread target information is transmitted in time domain, the energy accumulation of each spread modulated symbol can be improved, and the SNR can be improved as well.

In this embodiment, with the method for information transmission including the above operations S210 to S230, the first communication node may first determine a spreading sequence, then multiply a modulated symbol formed by coding and modulating the target information with the spreading sequence to obtain spread target information, and finally send the spread target information to the second communication node at the target sending time. Therefore, according to this embodiment of the present disclosure, it is possible to improve the demodulation performance for the target information by spreading the target information.

In an embodiment, because the target information may include information related to the identity of the first communication node, the embodiments of the present disclosure may be applied to an IoT application based on location information, such as asset tracking, logistics management, elderly/child/pet loss prevention, and the like. In addition, in such application scenarios, the acquisition and utilization of location information usually requires the user's permission in advance.

In an embodiment, the target information may not include the information related to the identity of the first communication node, and the present disclosure is not limited thereto.

In an embodiment, when the first communication node is in a target state in which there is no data connection with the second communication node, the first communication node may send the target information not including the identification information of the first communication node to the second communication node at the target sending time. In other words, in the target state in which the first communication node has not established a data connection with the second communication node, the first communication node sends the target information not including the identification information of the first communication node to the second communication node at the target sending time. As such, the first communication node does not need to perform a random access process to the second communication node before sending the target information, such that power consumption in the random access process can be avoided. In addition, the second communication node can determine the location of the first communication node according to the target information not including the identification information of the first communication node, such that privacy issues are avoided. Therefore, according to this embodiment of the present disclosure, it is possible to realize information transmission from the first communication node to the second communication node with low power consumption while avoiding privacy issues. In addition, the embodiments of the present disclosure can be applied to an environment sensing application based on location information, and such applications only need to know a channel through which an electromagnetic wave signal transmitted from a location to the base station passes, and does not need to know which transmitter transmits the electromagnetic wave signal. Therefore, the according to this embodiment of the present disclosure, it is possible to avoid privacy or ethical issues, and reduce the concerns of users, such that the number of terminal devices that can provide location information is greatly increased, thereby improving the performance of various schemes based on "location and corresponding wireless channel information".

In an embodiment, as shown in FIG. 6, S110 is further described. S110 may include, but not limited to, the following operations S310 and S320.

At operation S310, broadcast signaling from the second communication node is received, where the broadcast signaling is indicative of a common channel shared by the first communication node(s) to send the target information.

In a feasible implementation, the common channel may be pre-configured by the second communication node, which is not particularly limited herein.

At operation S320, the target information is sent to the second communication node over the common channel at the target sending time.

In this embodiment, with the method for information transmission including the above operations S310 to S320, the first communication node(s) first receives, from the second communication node, broadcast signaling for indicating a common channel used by the first communication node(s) to send the target information, and then sends the target information to the second communication node over the common channel at the target sending time. As such, a desirable sending environment is provided for the first communication node(s) to send the target information to the second communication node. The present disclosure is not limited to this embodiment.

It should be noted that even the first communication node is in a state of having established a data connection with the second communication node, the first communication node usually does not have a dedicated uplink transmission resource, so the first communication node needs to request an uplink transmission resource from the second communication node before transmitting information each time. Only after obtaining an uplink transmission resource grant from the second communication node, the first communication node in the connected state can transmit information over a time-frequency resource specified by the second communication node. In addition, if there is a large number of first communication nodes transmitting target information, and the large number of first communication nodes all need to enter a connected state before transmitting location information, the large number of first communication nodes perform random access and then request uplink transmission resources, leading to an increased probability of collision or congestion. Consequently, the first communication nodes consume more power in order to implement uplink information transmission or uplink data transmission.

In view of the collision or congestion caused by a large number of first communication nodes requesting uplink transmission resources, there is an uplink data transmission method in the related technology, i.e., SPS, which aims to reduce the overheads and time delay of physical control signaling of small data packet services, and is very suitable for periodic services, such as VoIP. The data rate of VoIP during a talk spurt is basically constant. For example, the average duration of each talk spurt is 1s to 2s, and one voice packet is generated every 20 ms, so each talk spurt contains 50 to 100 voice packets. The small-scale fading between the voice packets is compensated by closed-loop power control to ensure that the SNR of the signal on the receiving side can be kept constant. Therefore, the MCS can remain unchanged during this period. The allocated physical resources may remain unchanged, or may hop according to a fixed rule. Therefore, no dynamic signaling is needed during uplink information or data transmission. Moreover, SPS usually operates in the connected state, i.e., the first communication node has completed the random access process. Although the frequency of scheduling is far lower than the frequency of data packets, no resource collision occurs when different first communication nodes request uplink transmission resources, e.g., no reference signal or pilot collision occurs. In addition, in a 5G system, evolved SPS can be used in a URLLC scenario. In this case, SPS is referred to as Configured Grant, i.e., pre-configured resource grant. Configured Grant can also be used as a grant-free method or scheduling-free method, and because it can eliminate the need of "dynamic grant request" or "dynamic scheduling request" for each uplink information transmission or uplink data transmission, it is essentially "dynamic grant-free" or "dynamic scheduling-free". Moreover, in the SPS-type "dynamic scheduling-free" method, uplink transmission resources of the first communication nodes are also pre-configured by the second communication node to avoid resource (such as reference signal or pilot) collision.

Although the pre-configured scheduling-free method such as SPS or Configured Grant can reduce the overheads of physical control signaling in uplink information transmission or uplink data transmission, the spectral efficiency of the first communication nodes is still very low if the SPS method is followed to realize the transmission of target information by a large number of first communication nodes. For example, in a case where the first communication node undergoes a cell handover, the spectral efficiency of the first communication node is very low if the SPS method is used to realize the transmission of target information by the first communication node. In an example, if a first communication node has requested and obtained an uplink transmission resource from a second communication node of a cell A, but the first communication node undergoes a cell handover during this process, the first communication node needs to request a new pre-configured uplink transmission resource from a second communication node of a cell B to which the first communication node is handed over, and at the same time instruct the second communication node of the cell A to release the uplink transmission resource pre-configured for the first communication node. In addition, it is a complicated process for the first communication node to request the cell B for a new uplink transmission resource, which significantly increases the power consumption of the first communication node. Moreover, in the scenario of transmitting target information, the first communication node does not frequently transmit target information in order to save power. Therefore, to improve efficiency, the interval between pre-configured uplink transmission resources is usually relatively long, which means that the adverse effects caused by cell handover will be significantly increased, significantly reducing the spectral efficiency of the second communication node. Even second communication nodes whose location has not changed are prone to changes in their surrounding environment over a long period of time, especially for second communication nodes at the edge of the cell, leading to cell handover and consequently reducing the spectral efficiency of the second communication nodes. Therefore, the pre-configured scheduling-free method such as SPS or Configured Grant is not suitable for the scenario where a large number of first communication nodes transmit target information.

Based on the above analysis, in an embodiment, in the target state in which the first communication node(s) has not established a data connection with the second communication node, the first communication node(s) receives, from the second communication node, broadcast signaling for indicating a common time-frequency resource used by the first communication node(s) to send the target information, then selects a target time-frequency resource from the common time-frequency resource according to the broadcast signaling, and transmits the target information to the second communication node at the target sending time by using the target time-frequency resource. Therefore, according to the embodiments of the present disclosure, the second communication node does not need to allocate a dedicated time-frequency resource for the transmission of the target information of each first communication node (or does not need to arrange a different time-frequency resource for the transmission of the target information of each first communication node), thereby reducing signaling overheads.

In an embodiment, in the target state in which the first communication node has not established a data connection with the second communication node, the first communication node receives, from the second communication node, broadcast signaling for indicating a common time-frequency resource used by the first communication node(s) to send the target information and for indicating a common channel used by the first communication node to send the target information, then selects a target time-frequency resource from the common time-frequency resource according to the broadcast signaling, and finally sends the target information to the second communication node over the common channel by using the target time-frequency resource. In other words, when the first communication node needs to send the target information in the target state in which the first communication node has not established a data connection with the second communication node, the first communication node neither needs to establish a data connection with the second communication node in advance, nor needs to request an uplink transmission resource from the second communication node (i.e., does not need to obtain an uplink transmission resource grant or scheduling), but instead, independently sends the target information directly at the target sending time. Because the first communication node implements the transmission of the target information in the target state in which the first communication node has not established a data connection with the second communication node, the first communication node and the second communication node do not need to perform a connection release operation after the transmission of the target information is completed, and the first communication node can immediately enter the target state in which the first communication node has not established a data connection with the second communication node. Therefore, the embodiments of the present disclosure can realize the information transmission from the first communication node to the second communication node at low power consumption while reducing signaling overheads.

It should be noted that when the first communication node is in the target state in which the first communication node has not established a data connection with the second communication node, a pilot (such as a preamble or a reference signal) included in the information transmitted by the first communication node to the second communication node may be independently selected or generated by the first communication node. Independently selecting the pilot means determining the pilot from a preset pilot set. Independently generating the pilot means that the first communication node generates the pilot according to a preset rule or formula.

In contrast, if the pilot sent by the first communication node needs to be indicated or allocated through signaling from the second communication node, the first communication node needs to obtain signaling indicating the pilot from the second communication node before sending the pilot. In this case, the first communication node needs to first establish a data connection with the second communication node, so a series of processes of establishing the data connection are required, and therefore all problems in the process of establishing the data connection will also arise. Although these problems can be avoided through the independent selection or generation of the pilot by the first communication node, the independent selection or generation of the pilot by the first communication node causes a pilot collision due to the fact that there is no central node for centrally allocating pilots sent by different first communication nodes and different first communication nodes independently select pilots from a preset pilot set with a limited number of pilots, the same pilot may be selected by different first communication nodes, thus resulting in the pilot collision. In a scenario with high overload (i.e., there are a large number of first communication nodes sending target information to the same second communication node), the likelihood of pilot collision is very high. For example, when the number of pilots is N=64, the likelihood of pilot collision between any two first communication nodes is 1/64. Therefore, when there are many first communication nodes sending information at the same time, the collision probability is much greater than 1/64. Once pilot collision occurs between different first communication nodes, the second communication node cannot demodulate the target information of the first communication nodes according to the pilots, resulting in deterioration of transmission performance.

The following will explain the reason for high likelihood of pilot collision in the conventional pilot scheme used by the first communication node to transmit a signal in the target state in which the first communication node has not established a data connection with the second communication node.

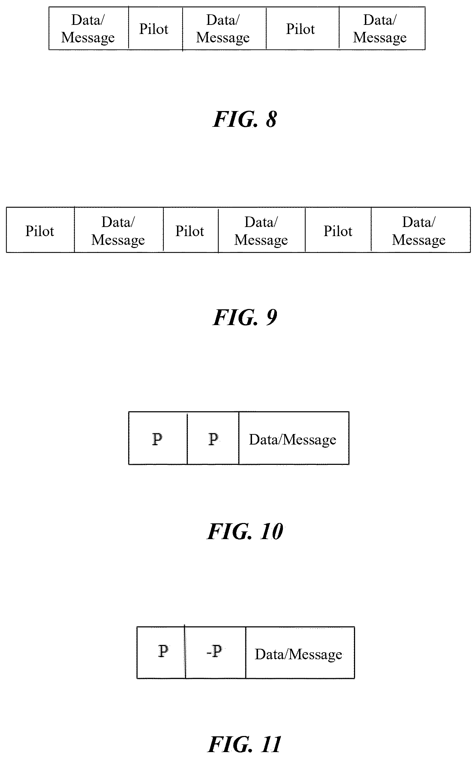

As shown in FIG. 7, FIG. 8, and FIG. 9, a pilot may be located in front of a data/message field, or between data/message fields, where"/" means or. The conventional pilot scheme has a characteristic, i.e., only one or one type of pilot can be transmitted each time. One pilot is a pilot composed of one sequence, and one type of pilot is a pilot composed of a plurality of associated sequences. This is the reason for the high likelihood of pilot collision. For example, a preamble [*P1, P2*] is transmitted, where the preamble is formed by simple repetitions of a preamble sequence *P*, *i.e., P1*=*P2*=*P* (as shown in FIG. 10). This preamble scheme can be used to determine timing/frequency offset information. Alternatively, a preamble [*P1, P2*] *is* transmitted, where [*P1, P2*] is formed by repetition of a preamble sequence P weighted by an Orthogonal Cover Code (OCC), so *P1*=*P* and *P2=P* (as shown in FIG. 10), or *P1*=*P* and *P2=-P* (as shown in FIG. 11). The first communication node may randomly select the preamble sequence P and OCC. Alternatively, a preamble [*P1, P2*] is transmitted, where [*P1, P2*] is formed by repetition of a preamble sequence P weighted in other manners. For example, *P1*=*αP* and *P2*=*βP*, where *α* and *β* are weight values (equivalent to OCC weighting, which is a special case where [*α*, *β*]=[1, 1] or [1, -1]). This preamble scheme can further increase the number of preambles, but may destroy the orthogonality of preambles. Similarly, a DMRS also has the above characteristics. In some pilot schemes, a preamble and a DMRS coexist. The preamble and the DMRS may have the above characteristics respectively, and are associated with each other. In this case, once the preamble is determined, the corresponding DMRS is determined. Therefore, pilot overheads are limited. Therefore, when the first communication node transmits a signal in the target state in which the first communication node has not established a data connection with the second communication node, the probability of pilot collision is high if a large number of first communication nodes simultaneously transmit information.

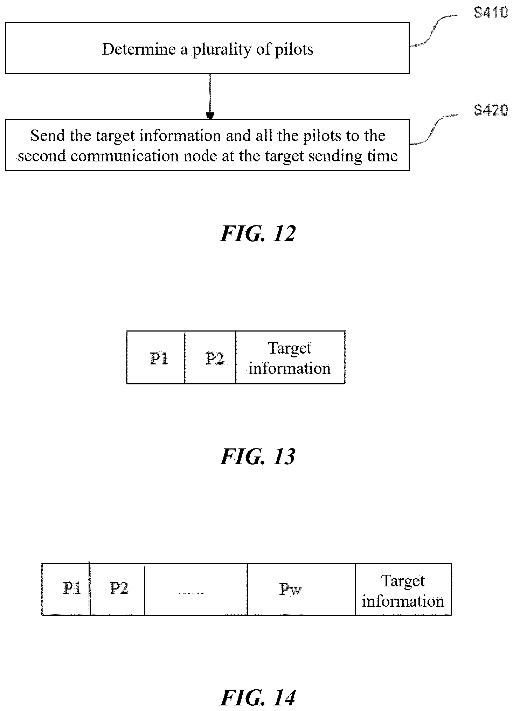

Based on the above analysis, in an embodiment, as shown in FIG. 12, S110 is further described. S110 may include, but not limited to, the following operations S410 and S420.

At operation S410, a plurality of pilots are determined.

It can be understood that the pilot may be referred to as a pilot signal, or a reference signal (RS), or a DMRS, or a preamble. The pilot is usually in the form of a sequence or a string of symbols, so the pilot is also referred to as a pilot sequence. Therefore, the plurality of pilots may be two or more pilot sequences, and the present disclosure is not limited thereto.

In a feasible implementation, the plurality of pilots are independent of each other, i.e., the plurality of pilots are not associated or correlated with each other. As shown in FIG. 13 and FIG. 14, FIG. 13 is a schematic diagram of two independent pilots (i.e., pilot *P1* and pilot *P2*), and FIG. 14 is a schematic diagram of w number of independent pilots, where the w number of independent pilots are respectively denoted as *P1*, *P2, ..., Pw,* and w may be a positive integer greater than 2, and the present disclosure is not limited thereto.

In a feasible implementation, determining the plurality of pilots may be implemented in various manners, for example, including: determining the plurality of pilots according to the target information; or determining the plurality of pilots according to a plurality of pieces of bit information in the target information; or determining the plurality of pilots from a preset pilot set according to a plurality of sets of a third number of pieces of bit information in the target information, i.e., determining a respective one of the plurality of pilots from the preset pilot set according to each set of the third number of pieces of bit information. The preset pilot set includes a fourth number of pilots, the third number and the fourth number are correlated by a logarithmic function, and the logarithmic function is a logarithmic function with a base of 2. For example, if the third number is *log₂M*, the fourth number is *M,* and the present disclosure is not limited thereto.

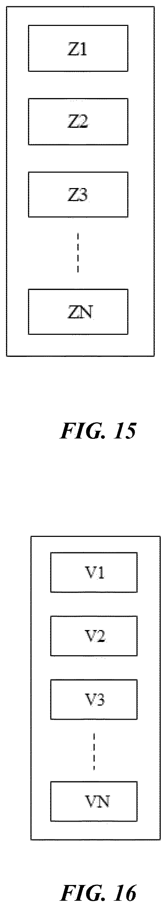

In an embodiment, as shown in FIG. 13 and FIG. 15, the number of pilots is two, and the two pilots are *P1* and *P2*. *P1* and *P2* are both from a preset pilot set *Z* including a fourth number *N* of pilots. *P1* and *P2* are determined from *Z* by the first communication node. *P1* and *P2* are independent of each other. The fourth number *N* of pilots are respectively denoted as *Z1, Z2, Z3, ..., ZN.* If *N=2^{m}* (i.e., 2 to the power of *m*), *m* pieces of bit information (i.e., the third number is *m*) are required to determine a pilot from *Z,* i.e., one pilot is determined from the preset pilot set *Z* according to the third number *m* of pieces of bit information in the target information. Therefore, *m* pieces of bit information are required for the first communication node to determine *P1* from *Z*, and another *m* pieces of bit information are required for the first communication node to determine *P2* from *Z*. The *m* pieces of bit information required to determine *P1* are independent of the *m* pieces of bit information required to determine *P2*. Therefore, the first communication node may determine *P1* and *P2* by using two sets of bit information, each set including *m* pieces of bit information. When target information of a first communication node is decoded correctly, the second communication node can acquire two pilots (i.e., *P1* and *P2*) of the first communication node, and then reconstruct the two pilots, so that interference of the pilots can be eliminated.

In an implementation, when the fourth number is N=64, the third number m=6 can be obtained according to *N*=*2^{m}*, so the first communication node can determine *P1* according to any 6 pieces of bit information in the target information, and determine *P2* according to another 6 pieces of bit information in the target information. Alternatively, the first communication node may select 6 pieces of bit information in a plurality of pieces of bit information in the target information according to a certain rule, determine *P1* according to the 6 pieces of bit information, select another 6 pieces of bit information in the plurality of pieces of bit information in the target information according to the rule, and determine *P2* according to the 6 pieces of bit information. It is apparent that, *P1* and *P2* may also be determined according to 12 pieces of bit information other than the 12 pieces of bit information described above, but it is necessary to send the additional 12 pieces of bit information to the second communication node, leading to reduced transmission efficiency. Alternatively, the first communication node may select a pilot from the preset pilot set *Z* including 64 pilots according to a rule, i.e., the 64 pilots are numbered with serial numbers, and the first communication node selects a serial number from the serial numbers 1 to 64 and determines the pilot corresponding to the selected serial number as *P1*, and repeats the operations to determine *P2*. Therefore, in the embodiments of the present disclosure, it is not necessary to additionally add information indicating a pilot to the target information, thereby reducing pilot overheads.

In a feasible implementation, at least two of the plurality of pilots belong to different pilot sets; or at least two of the plurality of pilots have different pilot lengths.

In an embodiment, the two pilots *P1* and *P2* belong to two different pilot sets, namely, a first pilot set and a second pilot set, so an index value of *P1* determined from the first pilot set and an index value of *P2* determined from the second pilot set are independent of each other.

In an embodiment, a pilot length of a pilot in the first pilot set including *N1* pilot sequences may be the same as or different from a pilot length of a pilot in the second pilot set including *N2* pilot sequences. *N1* and *N2* each represent the number of pilot sequences, both *N1* and *N2* are positive integers, and *N1* and *N2* may be arbitrary numerical values, which are not particularly limited herein.

In a feasible implementation, the first communication node may generate the pilots according to a preset rule or formula, and all pilots generated according to the preset rule or formula may constitute a preset pilot set or a pilot set, which is not particularly limited in the embodiments of the present disclosure.

In an embodiment, the formula for generating the pilots may be a Zadoff Chu (ZC) sequence formula. For example, different "root" values and/or different "cyclic shift" values are set in the ZC sequence formula to generate different pilots. In other words, the "cyclic shift" for generating *P1* is independent of the "cyclic shift" for generating *P2*; or, the "root" for generating *P1* is independent of the "root" for generating *P2*, and the "cyclic shift" for generating *P1* is independent of the "cyclic shift" for generating *P2*.

In an embodiment, the pilots may be generated by a shift register sequence generator, e.g., a Maximum Length Shift Register (MLSR) sequence generator. For example, different "initial states" are set in the shift register sequence generator to generate different pilots, so the "initial state" for generating *P1* is independent of the "initial state" for generating *P2*.

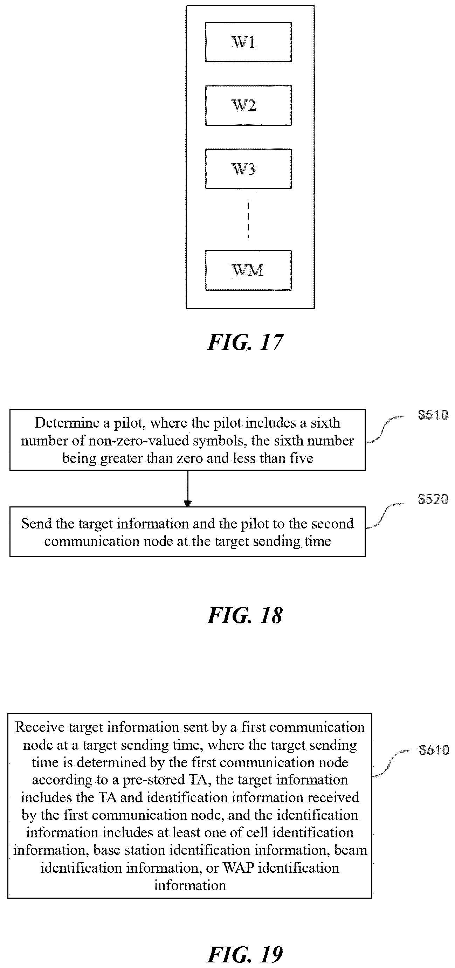

In another embodiment, the pilot *P1* may be generated by a sequence generation method for generating *N* number of pilot sequences, and the pilot *P2* may be generated by another sequence generation method for generating *M* number of pilot sequences. The sequence generation method for generating *M* number of pilot sequences is different from the sequence generation method for generating *N* number of pilot sequences, i.e., *N*≠*M,* so *P1* is independent of *P2.* For example, *N* number of pilot sequences are generated by a ZC sequence formula 1 and *M* number of pilot sequences are generated by another ZC sequence formula 2. A "root" in the ZC sequence formula 1 is different from a "root" in the ZC sequence formula 2, and/or a "cyclic shift" in the ZC sequence formula 1 is different from a "cyclic shift" in the ZC sequence formula 2, so the pilot sequences generated by the ZC sequence formula 1 are different from those generated by the ZC sequence formula 2. Therefore, the "root" for generating *P1* is independent of the "root" for generating *P2*, and/or the "cyclic shift" for generating *P1* is independent of the "cyclic shift" for generating *P2*. *N* and *M* each represent the number of pilot sequences, and *N* and *M* are both positive integers. A preset pilot set *V* including *N* number of pilot sequences is shown in FIG. 16, where the *N* number of pilot sequences are respectively denoted as *V1, V2, V3,* ..., *VN.* and a preset pilot set *W* including *M* number of pilot sequences is shown in FIG. 17, where the *M* number of pilot sequences are respectively denoted as *W1, W2, W3, ..., and WM,* and the present disclosure is not limited thereto.

In another embodiment, the pilot P1 may be generated by a sequence generation method for generating *N* number of pilot sequences, and the pilot P2 may be generated by another sequence generation method for generating *M* number of pilot sequences. The sequence generation method for generating the *N* number of pilot sequences is generated by a shift register sequence generator 1, and the sequence generation method for generating the *M* number of pilot sequences is generated by a shift register sequence generator 2. Because an "initial state" set in the shift register sequence generator 1 is different from an "initial state" set in the shift register sequence generator 2, pilot sequences generated by the shift register sequence generator 1 are also different from those generated by the shift register sequence generator 2, i.e., *N*≠*M.* Therefore, the "initial state" for generating P1 is independent of the "initial state" for generating P2. *N* and *M* each represent the number of pilot sequences, and *N* and *M* are both positive integers. A preset pilot set *V* including *N* number of pilot sequences is shown in FIG. 16, where the *N* number of pilot sequences are respectively denoted as *V1, V2, V3, ..., VN.* A preset pilot set *W* including *M* number of pilot sequences is shown in FIG. 17, where the *M* number of pilot sequences are respectively denoted as *W1, W2, W3,* ..., and *WM,* and the present disclosure is not limited thereto.

In a feasible implementation, the pilot may be a Physical Random Access Channel (PRACH) preamble sequence defined in an LTE standard, a PRACH preamble sequence defined in an NR standard, a DMRS sequence defined in an LTE standard, a DMRS sequence defined in an NR standard, an MLSR sequence, a Discrete Fourier Transform (DFT) sequence, or a Walsh-Hadamard sequence, and the present disclosure is not limited thereto.

At operation S420, the target information and all the pilots are sent to the second communication node at the target sending time.

In a feasible implementation, the target information may include information related to the pilots, e.g., index values of the pilots in the preset pilot set, initial states for generating the pilots, etc. For example, after the target information of the first communication node is successfully decoded, the information related to all the pilots transmitted by the first communication node in this transmission process may be acquired, to facilitate reconstruction of all the pilots, so that interference of the pilots can be eliminated.

In this embodiment, with the method for information transmission including the above operations S410 and S420, the first communication node first determines a plurality of pilots, and then sends the target information and all the pilots to the second communication node at the target sending time, to allow the second communication node to make full use of the pilots to estimate channel information and timing/frequency offset information of the target information, so as to realize demodulation of the target information.

In an embodiment, as shown in FIG. 18, S110 is further described. S110 may include, but not limited to, the following operations S510 and S520.

At operation S510, a pilot is determined, where the pilot includes a sixth number of non-zero-valued symbols, the sixth number being greater than zero and less than five.

It can be understood that the pilot may be referred to as a pilot signal, or a RS, or a DMRS, or a preamble. The pilot is usually in the form of a sequence or a string of symbols, so the pilot is also referred to as a pilot sequence. In addition, the number of pilots may be one, and the present disclosure is not limited thereto.

It can be understood that determining the pilot may be implemented in various manners, for example, including: determining the pilot according to the target information; or determining the pilot according to a plurality of pieces of bit information in the target information; or determining the pilot from a preset pilot set according to a third number of pieces of bit information in the target information. The preset pilot set includes a fourth number of pilots, the third number and the fourth number are correlated by a logarithmic function, and the logarithmic function is a logarithmic function with a base of 2. For example, if the third number is *log₂M*, the fourth number is *M,* and the present disclosure is not limited thereto.

In an embodiment, the third number may be 64, 128, or a greater number, and the present disclosure is not limited thereto.

In an embodiment, the first communication node may generate the pilots according to a preset rule or formula, and all pilots generated according to the preset rule or formula may constitute a preset pilot set or a pilot set, and the present disclosure is not limited thereto. For example, the formula for generating the pilot may be a ZC sequence formula. For example, a "root" value and/or a "cyclic shift" value is set in the ZC sequence formula to generate the pilot. For another example, the pilot may be generated by a shift register sequence generator. The present disclosure is not limited thereto.

In a feasible implementation, the pilot may be a PRACH preamble sequence defined in an LTE standard, a PRACH preamble sequence defined in an NR standard, a DMRS sequence defined in an LTE standard, a DMRS sequence defined in an NR standard, an MLSR sequence, a DFT sequence, or a Walsh-Hadamard sequence, and the present disclosure is not limited thereto.

At operation S520, the target information and the pilot are sent to the second communication node at the target sending time.

In this embodiment, with the method for information transmission including the above operations S510 to S520, the first communication node firstly determines the pilot, and then transmits the target information and the pilot to the second communication node at the target sending time, such that the second communication node determines the channel information and the timing/frequency offset information of the entire transmission bandwidth according to the non-zero-valued symbols in the pilot.

In addition, FIG. 19 shows a method for information transmission according to another embodiment of the present disclosure. The method is applied to a second communication node. The method may include, but not limited to, a following operation S610.

At operation S610, target information sent by a first communication node at a target sending time is received, where the target sending time is determined by the first communication node according to a pre-stored TA. The target information includes the TA and identification information received by the first communication node. The identification information includes at least one of cell identification information, base station identification information, beam identification information, or WAP identification information.

In a feasible implementation, the TA may be a numerical value, which may be expressed using several bits. For example, a time period from 0 to a maximum TA is divided into *2^{D}* (2 to the power of *D*) parts, where any TA within the range of 0 to the maximum TA may be expressed using *D* bits, and *D* may be any positive integer, so as to determine the TA. The first communication node determines the target sending time according to the TA, places the *D* bits corresponding to the TA into the target information for encoding and modulation, and then transmits same to the second communication node. After demodulating and decoding the target information from the first communication node correctly, the second communication node can determine, according to the *D* bits corresponding to the TA, the TA of the first communication node.

In a feasible embodiment, when the identification information includes WAP identification information, the WAP identification information may include any one of cell-free communication system AP identification information, WLAN AP identification information, WWAN AP identification information, or Bluetooth AP identification information, and the present disclosure is not limited thereto. For example, if the first communication node is in a WLAN (such as a Wi-Fi system), the first communication node may acquire identification information of a WLAN router (such as a Wi-Fi router), where the identification information may be a MAC address of the router. Then, the first communication node sends target information including the MAC address of the router to the second communication node, to allow the second communication node to determine the location of the first communication node according to the MAC address of the router. For another example, if the first communication node is in a cell-free communication system, the first communication node may obtain cell-free communication system AP identification information, and then the first communication node may send target information including the cell-free communication system AP identification information to the second communication node, to allow the second communication node to determine the location of the first communication node according to the cell-free communication system AP identification information. For another example, if the first communication node is in a Bluetooth wireless communication system, the first communication node may obtain Bluetooth AP identification information and then send target information including the Bluetooth AP identification information to the second communication node, to allow the second communication node to determine the location of the first communication node according to the Bluetooth AP identification information. The present disclosure is not limited thereto.

In a feasible embodiment, when the identification information includes the cell identification information, the target information further includes a received wireless signal strength of the cell identification information received by the first communication node. Alternatively, when the identification information includes the base station identification information, the target information further may further include a received wireless signal strength of the base station identification information received by the first communication node. Alternatively, when the identification information includes the beam identification information, the target information further may further include a received wireless signal strength of the beam identification information received by the first communication node. Alternatively, when the identification information includes the WAP identification information, the target information further includes a received wireless signal strength of the WAP identification information received by the first communication node. According to the strength information of the wireless signals corresponding to the identification information, the second communication node can more accurately determine the location of the first communication node. The strength of all the above wireless signals may be a received signal strength indication, and the present disclosure is not limited thereto.

In a feasible implementation, the WAP may be a WLAN router, and the WLAN router may be a Wi-Fi router, and the present disclosure is not limited thereto.

In a feasible implementation, the identification information may be a MAC address, an IP address, a port number, an SSID, a device code, or other information that can uniquely identify a wireless communication device, etc. The device code may be an IMEI, an MEID, or the like, and the present disclosure is not limited thereto.

In a feasible embodiment, when the identification information includes the cell identification information, the cell identification information may include cell identifiers of a plurality of cells. Alternatively, when the identification information includes the base station identification information, the base station identification information may include base station identifiers of a plurality of base stations. Alternatively, the identification information includes the beam identification information, the beam identification information may include beam identifiers of a plurality of beams. Alternatively, the identification information includes the WAP identification information, the WAP identification information may include identifiers of a plurality of WAPs. The present disclosure is not limited thereto.

In a feasible embodiment, the TA may be determined according to a broadcast signal sent by the second communication node, and the broadcast signal may include a downlink synchronization signal or a downlink reference signal, and the present disclosure is not limited thereto. For example, the second communication node may send a broadcast signal to notify the first communication node of the location of the second communication node. Then the first communication node may calculate a distance between the first communication node and the second communication node according to the location of the second communication node and the location of the first communication node, determine a transmission delay of the target information, and determine a TA required for transmitting the target information. For another example, the second communication node sends a downlink synchronization signal or a downlink reference signal to the first communication node. The first communication node may calculate a strength of the downlink synchronization signal or a strength of the downlink reference signal, estimate a TA according to the strength, and after independently determining the TA, send the target information to the second communication node according to the TA. The present disclosure is not limited thereto.

In this embodiment, with the method for information transmission including S610, the second communication node receives target information sent by the first communication node at a target sending time, where the target sending time is determined according to a pre-stored TA. The target information includes the TA and identification information received by the first communication node. The identification information includes at least one of cell identification information, base station identification information, beam identification information, or WAP identification information. In other words, the first communication node can determine the target sending time according to the pre-stored TA, and send the target information to the second communication node at the target sending time. As such, the first communication node does not need to acquire the TA from the second communication node, and therefore does not need to perform a series of interactive response processes with the second communication node, such that signaling overheads caused by the interactive response processes are avoided. In addition, the second communication node can determine the location of the first communication node according to the identification information in the target information. Therefore, the embodiments of the present disclosure can realize information transmission from a first communication node to a second communication node while reducing signaling overheads.

In a feasible implementation, the target information may further include geomorphological information, climate information, gas concentration information (such as chemical gas concentration information), road condition information, security information, etc. The climate information may include illumination information, temperature information, precipitation information, wind information, sandstorm information, and the like, and the present disclosure is not limited thereto.

In an embodiment, the second communication node may demodulate and decode the target information including the TA from the first communication node, and after correctly demodulating and decoding the target information, the TA for transmission by the first communication node can be acquired. Further, the second communication node can estimate a multipath channel according to the target information, combine the TA in the target information with the multipath channel through which the target information passes to determine a transmission delay of all paths through which the target information sent by the first communication node to the second communication node passes, and calculate a transmission distance according to the transmission delay of all paths. As such, the sensing of the transmission environment can be realized. The present disclosure is not limited thereto.

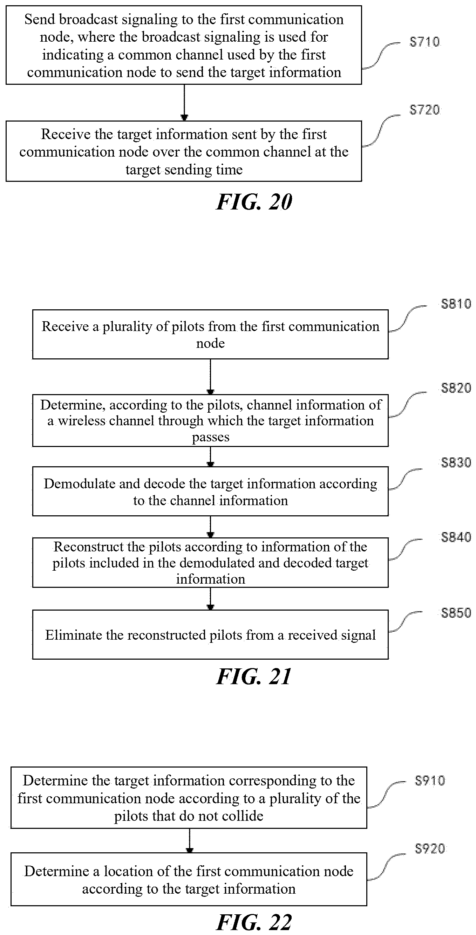

In an embodiment, as shown in FIG. 20, S610 is further described. S610 may include, but not limited to, the following operations S710 and S720.

At operation S710, broadcast signaling is sent to the first communication node(s), where the broadcast signaling is indicative of a common channel used by the first communication node(s) to send the target information.

In a feasible implementation, the common channel may be pre-configured by the second communication node, and the present disclosure is not limited thereto.

At operation S720, the target information sent by the first communication node(s) over the common channel at the target sending time is received.

In this embodiment, with the method for information transmission including the above operations S710 to S720, the second communication node first sends, to the first communication node(s), broadcast signaling indicative of the shared channel used by the first communication node(s) to send the target information, and then receives the target information sent by the first communication node(s) over the common channel at the target sending time. As such, a desirable sending environment is provided for the first communication node(s) to send the target information to the second communication node. The present disclosure is not limited thereto.

In an embodiment, as shown in FIG. 21, the method for information transmission may further include, but not limited to, the following operations S810, S820, S830, S840, and S850.

At operation S810, a plurality of pilots are received from the first communication node.

It can be understood that the pilot may be referred to as a pilot signal, or a RS, or a DMRS, or a preamble. The pilot is usually in the form of a sequence or a string of symbols, so the pilot is also referred to as a pilot sequence. Therefore, the plurality of pilots may be two or more pilot sequences, and the present disclosure is not limited thereto.

In a feasible embodiment, the plurality of pilots are independent of each other, i.e., the plurality of pilots are not associated or correlated with each other. As shown in FIG. 13 and FIG. 14, FIG. 13 is a schematic diagram of two independent pilots (i.e., pilot P1 and pilot P2), and FIG. 14 is a schematic diagram of w number of independent pilots, where the w number of independent pilots are respectively denoted as *P1*, *P2,* ..., Pw, and w may be a positive integer greater than 2, the present disclosure is not limited thereto.

In a feasible embodiment, determining the plurality of pilots may be implemented in various manners, for example, including: determining the plurality of pilots according to target information; or determining the plurality of pilots according to a plurality of pieces of bit information in the target information; or determining the plurality of pilots from a preset pilot set according to a plurality of sets of a third number of pieces of bit information in the target information. The preset pilot set includes a fourth number of pilots, the third number and the fourth number are correlated by a logarithmic function, and the logarithmic function is a logarithmic function with a base of 2. For example, if the third number is *log₂M*, the fourth number is *M,* the present disclosure is not limited thereto.

In an embodiment, as shown in FIG. 13 and FIG. 15, the number of pilots is two, and the two pilots are *P1* and *P2. P1* and *P2* are both from a preset pilot set *Z* including a fourth number *N* of pilots. *P1* and *P2* are determined from Z by the first communication node. *P1* and *P2* are independent of each other. The fourth number *N* of pilots are respectively denoted as *Z1, Z2, Z3, ..., ZN.* If *N=2"* (i.e., 2 to the power of *m*), *m* pieces of bit information (i.e., the third number is *m*) are required to determine a pilot from *Z,* i.e., one pilot is determined from the preset pilot set *Z* according to the third number *m* of pieces of bit information in the target information. Therefore, *m* pieces of bit information are required for the first communication node to determine *P1* from *Z,* and another *m* pieces of bit information are required for the first communication node to determine *P2* from *Z.* The *m* pieces of bit information required to determine *P1* are independent of the *m* pieces of bit information required to determine *P2*. Therefore, the first communication node may determine *P1* and *P2* by means of two sets of bit information, each set including *m* pieces of bit information. When target information of a first communication node is decoded correctly, the second communication node can acquire two pilots (i.e., *P1* and *P2)* of the first communication node, such that interference of the pilots can be eliminated.

Further, when the fourth number is *N*=64, the third number *m=6* can be obtained according to *N*=*2^{m}*, so the first communication node can determine *P1* according to any 6 pieces of bit information in the target information, and determine *P2* according to another 6 pieces of bit information in the target information. Alternatively, the first communication node may select 6 pieces of bit information in a plurality of pieces of bit information in the target information according to a certain rule, determine *PI* according to the 6 pieces of bit information, select another 6 pieces of bit information in the plurality of pieces of bit information in the target information according to the rule, and determine *P2* according to the 6 pieces of bit information. It is apparent that, *P1 and P2* may also be determined according to 12 pieces of bit information other than the 12 pieces of bit information described above, but it is necessary to send the additional 12 pieces of bit information to the second communication node, leading to reduced transmission efficiency. Alternatively, the first communication node may select a pilot from the preset pilot set Z including 64 pilots according to a rule, i.e., the 64 pilots are numbered with serial numbers, and the first communication node selects a serial number from the serial numbers 1 to 64 and determines the pilot corresponding to the selected serial number as *P1,* and repeats the operations to determine *P2.* Therefore, in the embodiments of the present disclosure, it is not necessary to additionally add information indicating a pilot to the target information, thereby reducing pilot overheads.

In a feasible embodiment, at least two of the plurality of pilots belong to different pilot sets; or at least two of the plurality of pilots have different pilot lengths; or each of the pilots includes a fifth number of non-zero-valued symbols, the fifth number being greater than zero and less than five, and the present disclosure is not limited thereto.

In an embodiment, the two pilots *P1* and *P2* belong to two different pilot sets, namely, a first pilot set and a second pilot set, so an index value of *P1* determined from the first pilot set and an index value of *P2* determined from the second pilot set are independent of each other.

In an embodiment, a pilot length of a pilot in the first pilot set including *N1* number of pilot sequences may be the same as or different from a pilot length of a pilot in the second pilot set including *N2* number of pilot sequences. *N1* and *N2* each represent the number of pilot sequences, both *N1* and *N2* are positive integers, and *N1* and *N2* may be arbitrary numerical values, and the present disclosure is not limited thereto.

In a feasible implementation, the first communication node may generate the pilots according to a preset rule or formula, and all pilots generated according to the preset rule or formula may constitute a preset pilot set or a pilot set, and the present disclosure is not limited thereto.

In an embodiment, the formula for generating the pilots may be a ZC sequence formula. For example, different "root" values and/or different "cyclic shift" values are set in the ZC sequence formula to generate different pilots. In other words, the "root" or "cyclic shift" for generating *P1* is independent of the "root" or "cyclic shift" for generating *P2;* or, the "root" for generating *P1* is independent of the "root" for generating *P2,* and the "cyclic shift" for generating *P1* is independent of the "cyclic shift" for generating *P2.*

In an embodiment, the pilots may be generated by a shift register sequence generator. For example, different "initial states" are set in the shift register sequence generator to generate different pilots, so the "initial state" for generating *P1* is independent of the "initial state" for generating *P2*.

In another embodiment, the pilot *P1* may be generated by a sequence generation method for generating *N* number of pilot sequences, and the pilot *P2* may be generated by another sequence generation method for generating *M* number of pilot sequences. The sequence generation method for generating the *M* number of pilot sequences is different from the sequence generation method for generating the *N* number of pilot sequences, i.e., *N*≠*M*, so *P1* is independent of *P2.* For example, *N* number of pilot sequences are generated by a ZC sequence formula 1 and *M* number of pilot sequences are generated by another ZC sequence formula 2. A "root" in the ZC sequence formula 1 is different from a "root" in the ZC sequence formula 2, and/or a "cyclic shift" in the ZC sequence formula 1 is different from a "cyclic shift" in the ZC sequence formula 2, so the pilot sequences generated by the ZC sequence formula 1 are different from those generated by the ZC sequence formula 2. Therefore, the "root" for generating *P1* is independent of the "root" for generating *P2*, and/or the "cyclic shift" for generating *P1* is independent of the "cyclic shift" for generating *P2. N* and *M* each represent the number of pilot sequences, and *N* and *M* are both positive integers. A preset pilot set *V* including *N* pilot sequences is shown in FIG. 16, where the *N* number of pilot sequences are respectively denoted as *V1, V2, V3, ..., VN;* and a preset pilot set *W* including *M* number of pilot sequences is shown in FIG. 17, where the M number of pilot sequences are respectively denoted as *W1, W2, W3, ..., WM,* and the present disclosure is not limited thereto.

In another embodiment, the pilot *P1* may be generated by a sequence generation method for generating *N* number of pilot sequences, and the pilot *P2* may be generated by another sequence generation method for generating *M* number of pilot sequences. The sequence generation method for generating the *N* number of pilot sequences is generated by a shift register sequence generator 1, and the sequence generation method for generating the *M* number of pilot sequences is generated by a shift register sequence generator 2. Because an "initial state" set in the shift register sequence generator 1 is different from an "initial state" set in the shift register sequence generator 2, pilot sequences generated by the shift register sequence generator 1 are also different from those generated by the shift register sequence generator 2, i.e., *N*≠*M.* Therefore, the "initial state" for generating *P1* is independent of the "initial state" for generating *P2. N* and *M* each represent the number of pilot sequences, and *N* and *M* are both positive integers. A preset pilot set *V* including *N* number of pilot sequences is shown in FIG. 16, where the *N* number of pilot sequences are respectively denoted as *V1, V2, V3, ..., VN;* and a preset pilot set *W* including *M* number of pilot sequences is shown in FIG. 17, where the *M* number of pilot sequences are respectively denoted as *W1, W2, W3, ..., WM,* and the present disclosure is not limited thereto.

In a feasible implementation, the pilot may be a PRACH preamble sequence defined in an LTE standard, a PRACH preamble sequence defined in an NR standard, a DMRS sequence defined in an LTE standard; a DMRS sequence defined in an NR standard, an MLSR sequence, a DFT sequence, or a Walsh-Hadamard sequence, which is not particularly limited herein.

In a feasible implementation, a pilot having a small number of non-zero-valued symbols in the preset pilot set may be referred to as a sparse pilot, and the present disclosure is not limited thereto.

At operation S820, channel information of a wireless channel through which the target information passes is determined according to the pilots.

At operation S830, the target information is demodulated and decoded according to the channel information.

At operation S840, the pilots are reconstructed according to information of the pilots included in the demodulated and decoded target information.

At operation S850, the reconstructed pilots are eliminated from a received signal.

In this embodiment, with the method for information transmission including the above operations S810 to S850, the second communication node first receives a plurality of pilots from the first communication node, then determines, according to the pilots, channel information of a wireless channel through which the target information passes, demodulates and decodes the target information according to the channel information, reconstructs the pilots according to information of the pilots included in the demodulated and decoded target information, and finally eliminates the reconstructed pilots from a received signal. Therefore, according to the embodiments of the present disclosure, the number of pilots can be increased without increasing pilot resource overheads, thereby reducing the probability of pilot collision, and further supporting the access of more first communication nodes.

In a feasible implementation, the target information may include information related to the pilots, e.g., index values of the pilots in the preset pilot set, initial states for generating the pilots, etc. For example, after the target information of the first communication node is successfully decoded, the information related to all the pilots transmitted by the first communication node in this transmission process can be acquired, to facilitate reconstruction of all the pilots, so that interference of the pilots can be eliminated.

In a feasible embodiment, only part of information of the wireless channel through which the target information passes may be estimated according to the pilot, and it is not necessary to estimate all information of the wireless channel through which the target information passes according to the pilots, and the present disclosure is not limited thereto.

In an embodiment, as shown in FIG. 22, the method for information transmission may further include, but not limited to, the following operations S910 and S920.

At operation S910, the target information corresponding to the first communication node(s) is determined according to a plurality of the pilots that do not collide.

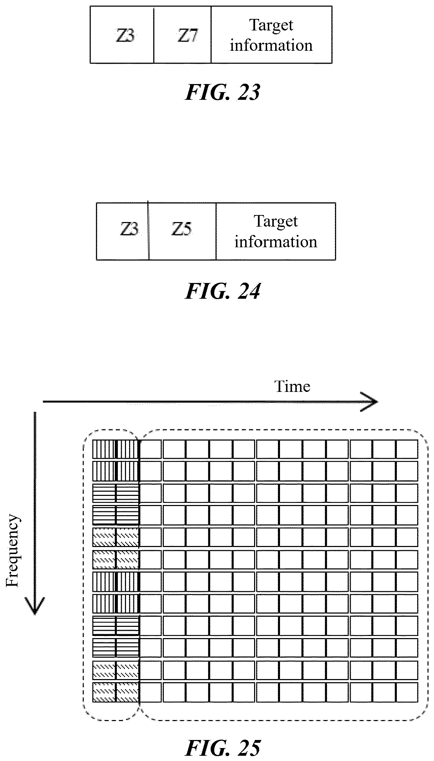

In an embodiment, as shown in FIG. 23 and FIG. 24, it is assumed that two first communication nodes, i.e., a first terminal device and a second terminal device, each sends two pilots to the same second communication node. The two pilots of the first terminal device are denoted as *V1* and *V2,* and the two pilots of the second terminal device are denoted as *W1* and *W2.* If *V1* and *V2*belong to two different pilot sets, i.e., *V1* belongs to a pilot set *Z3* and *V2* belongs to a pilot set *Z7,* and *W1* and *W2*belong to two different pilot sets, i.e., *W1* belongs to the pilot set *Z3 and W2* belongs to a pilot set *Z5, V1* collides with *W1* because *W1* and *V1* belong to the same pilot set, but *V2* does not collide with *W2* because *W2 and V2* belong to different pilot sets. Therefore, the second communication node may perform channel estimation using the second pilot sequences (i.e., *V2* and *W2*) that do not collide with each other, to determine channel information of a wireless channel, so as to demodulate target information from the first terminal device and the second terminal device.

At operation S920, a location of the first communication node is determined according to the target information.

In this embodiment, with the method for information transmission including the above operations S910 and S920, the second communication node first determines the target information corresponding to the first communication node according to a plurality of pilots that do not collide, and then determines a location of the first communication node according to the target information. Therefore, according to the embodiments of the present disclosure, the probability of pilot collision can be reduced, and the location of the first communication node can be determined.

In an embodiment, when the first communication node sends two or more pilots to the second communication node at a time, and the plurality of pilots are independent of each other (i.e., the plurality of pilots are referred to as independent pilots), the second communication node determines the target information corresponding to the first communication node according to the plurality of pilots that do not collide, and then determines the location of the first communication node according to the target information. As such, pilot collision is reduced, and the load capacity of the second communication node is further increased. In other words, under the same pilot overheads, the probability that the independent pilots of different first communication nodes collide is smaller than the probability of collision of a conventional single-pilot scheme. Therefore, the embodiments of the present disclosure support the access of more first communication nodes in the target state in which the first communication nodes have not established a data connection with the second communication node.

In an embodiment, when the second communication node is a base station, the base station can determine, by using iterative receivers in each iteration, the target information corresponding to the first communication node according to the plurality of pilots that do not collide, and then reconstruct the target information and the pilots. The base station iteratively performs the operations, until the target information corresponding to all the first communication nodes is determined.

It should be noted that in a transmission scenario where there is no data connection between the first communication node and the second communication node or a scheduling-free transmission scenario, uplink transmission resources (such as reference signals or pilot information) are also independently selected by the first communication nodes, so different first communication nodes may select the same uplink transmission resource, leading to resource collision. When the number of first communication nodes is large (i.e., in the case of high overload), the probability of resource collision is very high. Once resource collision occurs, the second communication node cannot use the uplink transmission resources to separate the first communication nodes that select the same uplink transmission resource. In order to reduce pilot collision and estimate a channel and a timing/frequency offset, pilot resources need to be increased manyfold, i.e., the length of the pilot sequence is increased in double, and the detection complexity is increased by square. In the embodiments of the present disclosure, the target information can be determined according to the plurality of pilots that do not collide, so as to reduce the probability of pilot collision and further increase the number of accessing first communication nodes.

In a feasible implementation, each of the plurality of pilots includes a fifth number of non-zero-valued symbols, the fifth number is greater than zero and less than five, and the present disclosure is not limited thereto.

In an embodiment, the second communication node may receive a pilot from the first communication node, where the pilot includes a sixth number of non-zero-valued symbols, the sixth number is greater than zero and less than five; determine, according to the pilot, channel information of a wireless channel through which information sent by the first communication node passes; and finally demodulate and decode the target information of the first communication node according to the channel information, and the present disclosure is not limited thereto.

In an embodiment, the second communication node may receive, from the first communication node, a pilot including a sixth number of non-zero-valued symbols, determine a spatial domain channel according to the pilot, then determine a spatial domain combining weight through the determined spatial domain channel, combine received symbols of a plurality of receiving antennas, and finally determine channel information and timing/frequency offset information of the entire transmission bandwidth according to the combined received symbols. In other words, it is not necessary to determine the channel information and the timing/frequency offset information of the entire transmission bandwidth according to the pilot. Therefore, the embodiments of the present disclosure greatly reduce the task of pilots, such that time-frequency resources occupied by each pilot signal can be minimized, and the number of pilots can be maximized, thereby allowing more first communication nodes to transmit information according to a pre-configured scheduling-free or contention-based scheduling-free method.

The method for information transmission set forth in the above embodiments will be described below by using a sparse pilot as an example.

In order to reduce pilot collision, more pilots need to be determined, i.e., the number of pilots in the preset pilot set should be as large as possible. An increase in the number of pilots indicates an increase in pilot overheads. In addition, channel estimation and timing offset or frequency offset estimation need to be performed based on the pilots, in order to implement correlation demodulation of data symbols in the target information. Therefore, each reference signal needs to occupy enough resources, i.e., each reference signal should not be distributed too sparsely over the entire transmission bandwidth and all time, in order to estimate the channel information (such as wireless multipath channel, i.e., frequency selective channel) of the entire transmission bandwidth and the timing/frequency offset information in the transmission time. Therefore, if a conventional pilot scheme is used to ensure the transmission performance when the first communication node is in the target state in which the first communication node has not established a data connection with the second communication node, pilot overheads will be increased manyfold, and the detection complexity will also be increased significantly.

A DMRS set is defined, which includes 12 reference signals. A DMRS may also be referred to as a DMRS port. In other words, a set including 12 DMRS ports is defined.

FIG. 25 is a schematic diagram of a defined PRB according to an embodiment. In an embodiment, as shown in FIG. 25, a PRB is defined, which includes 14 OFDM symbols (or Discrete Fourier Transform-Spread-Orthogonal Frequency Division Multiplexing (DFT-S-OFDM) or Single-carrier Frequency-Division Multiple Access (SC-FDMA)) symbols in time domain and 12 subcarriers in frequency domain. Each cell represents a subcarrier of an OFDM symbol, and usually is also referred to as a Resource Element (RE), so the PRB includes a total of 12×14=168 REs. Because the first two OFDM symbols are used to carry the DMRSs, i.e., the first two OFDM symbols are used as a DMRS region, the DMRSs account for 1/7 of resource overheads. A region other than the DMRS region is a data symbol region.

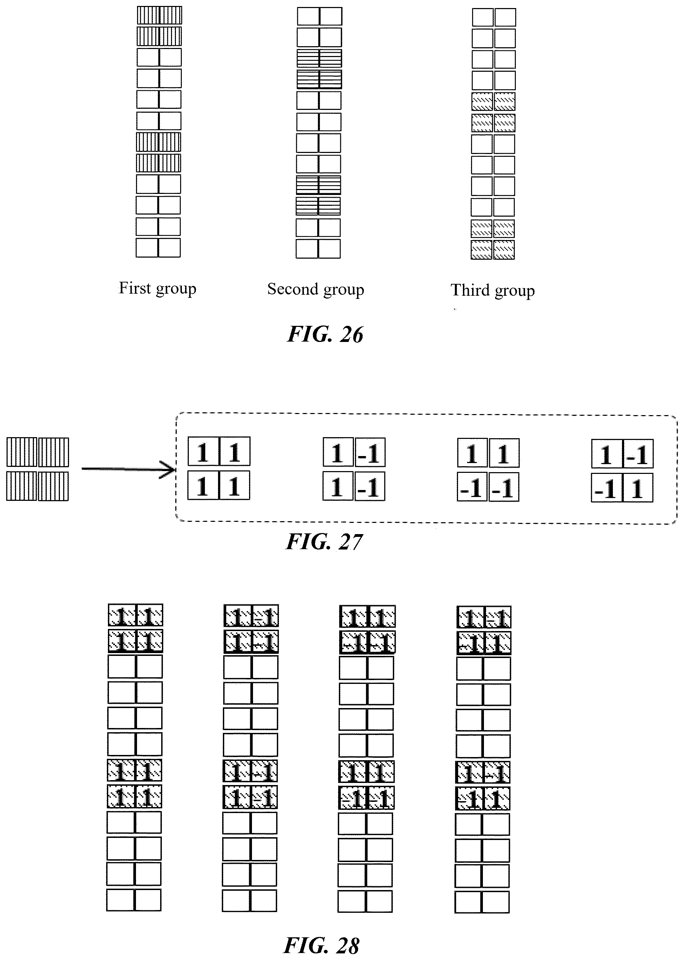

FIG. 26 is a schematic diagram of a defined DMRS according to an embodiment. In an embodiment, as shown in FIG. 26, the DMRSs may be divided into three groups according to positions of REs occupied by the DMRSs. Non-zero-valued symbols (or referred to as non-zero-valued signals, useful signals, etc.) (i.e., the symbols are non-zero values) of a first group of DMRSs are carried on a first RE, and the four DMRS ports may be distinguished by OCC codes. Non-zero-valued symbols of a second group of DMRSs are carried on a second RE, and the four DMRS ports may be distinguished by OCC codes. Non-zero-valued symbols of a third group of DMRSs are carried on a third RE, and the four DMRS ports may be distinguished by OCC codes. In FIG. 26, cells corresponding to the first RE are filled with vertical lines, cells corresponding to the second RE are filled with horizontal lines, cells corresponding to the third RE are filled with wavy lines, and each group of DMRSs takes a value of 0 (i.e., there is no signal) on blank REs not filled with any pattern. It can be seen that for each group of DMRSs, not all REs in the DMRS region have signals. However, even if DMRS ports used by a first communication node (such as a terminal device) have no signal only on some REs in the DMRS region, the REs having no signal cannot be used use to transmit data. Therefore, DMRSs (or DMRS ports) in each group of DMRSs also account for 1/7 of resource overheads.

If the non-zero-valued symbols of each group of DMRSs are carried on the same RE, different DMRSs can only be distinguished by non-zero-valued symbols with different values. For example, different DMRS ports may be distinguished by time domain OCCs and frequency domain OCCs. FIG. 27 is a schematic diagram of identifying different reference signal ports by OCC codes according to an embodiment. In an embodiment, as shown in FIG. 27, using the four DMRSs in the first group in FIG. 26 as an example, 2-bit OCCs [1,1] and [1,-1] in time domain and 2-bit OCCs [1, 1] and [1,-1] in frequency domain may be used jointly to identify the four DMRS ports, i.e., for the group of DMRS ports, different DMRS ports are generated by carrying different OCCs on the first RE. The same applies to the four DMRSs in the second group and the four DMRSs in the third group in FIG. 26. Therefore, a total of 12 DMRSs of the defined DMRS sets, i.e., 12 DMRS ports, can be obtained.

FIG. 28 is a schematic diagram of a DMRS defined using OCC codes according to an embodiment. In an embodiment, as shown in FIG. 28, for the four DMRSs in the first group in FIG. 26, 2-bit OCCs [1,1] and [1,-1] in time domain and 2-bit OCCs [1, 1] and [1,-1] in frequency domain may be used jointly to identify the four DMRS ports. In FIG. 28, digits in shaded portions of the first to third columns are all "1" from top to bottom, digits in shaded portions of the fourth column are all "-1" from top to bottom, digits in shaded portions of the fifth to seventh columns are respectively "1", "-1", "1", and "-1" from top to bottom, and digits in shaded portions of the eighth column are respectively "-1", "1", "-1", and "1" from top to bottom.

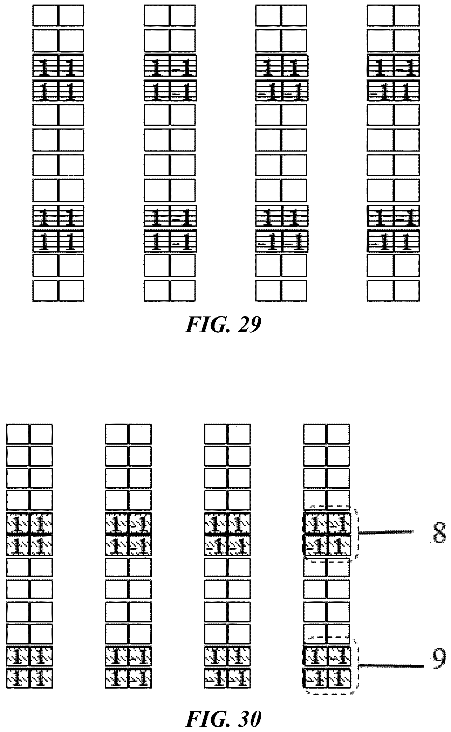

FIG. 29 is another schematic diagram of a DMRS defined using OCCs according to an embodiment. In an embodiment, as shown in FIG. 29, for the four DMRSs in the second group in FIG. 26, 2-bit OCCs [1,1] and [1,-1] in time domain and 2-bit OCCs [1, 1] and [1,-1] in frequency domain may be used jointly to identify the four DMRS ports. In FIG. 29, digits in shaded portions of the first to third columns are all "1" from top to bottom, digits in shaded portions of the fourth column are all "-1" from top to bottom, digits in shaded portions of the fifth to seventh columns are respectively "1", "-1", "1", and "-1" from top to bottom, and digits in shaded portions of the eighth column are respectively "-1", "1", "-1", and "1" from top to bottom.

FIG. 30 is another schematic diagram of a DMRS defined using OCCs according to an embodiment. In an embodiment, as shown in FIG. 30, number "8" denotes the first Reference Signal Element (RSE), and number "9" denotes the second RSE. For the four DMRSs in the third group in FIG. 26, 2-bit OCCs [1,1] and [1,-1] in time domain and 2-bit OCCs [1, 1] and [1,-1] in frequency domain may be used jointly to identify the four DMRS ports. In FIG. 30, digits in shaded portions of the first to third columns are all "1" from top to bottom, digits in shaded portions of the fourth column are all "-1" from top to bottom, digits in shaded portions of the fifth to seventh columns are respectively "1", "-1", "1", and "-1" from top to bottom, and digits in shaded portions of the eighth column are respectively "-1", "1", "-1", and "1" from top to bottom.

In the present disclosure, reference signals carried on several adjacent REs (RE) in time domain and frequency domain may be referred to as an RSE. For example, in FIG. 25 to FIG. 30, reference signals carried on four consecutive REs in time domain and frequency domain are referred to as an RSE. Reference signals on four adjacent shaded cells can be seen as an RSE. In terms of the channel estimation function, in addition to the characteristic that an RSE is formed by adjacent REs in time domain or frequency domain, there is another characteristic that each RSE can estimate one channel value when reference signals are used for channel estimation.

Based on the above definitions, as shown in FIG. 25 to FIG. 30, in the defined DMRS set, each DMRS has two RSEs within the bandwidth of one PRB, so channel values at two positions within the bandwidth of one PRB (i.e., within the bandwidth of 12 subcarrier) can be estimated. In addition, channel values of 12 subcarriers within the bandwidth of one PRB can be obtained by interpolation of the RSE estimates.

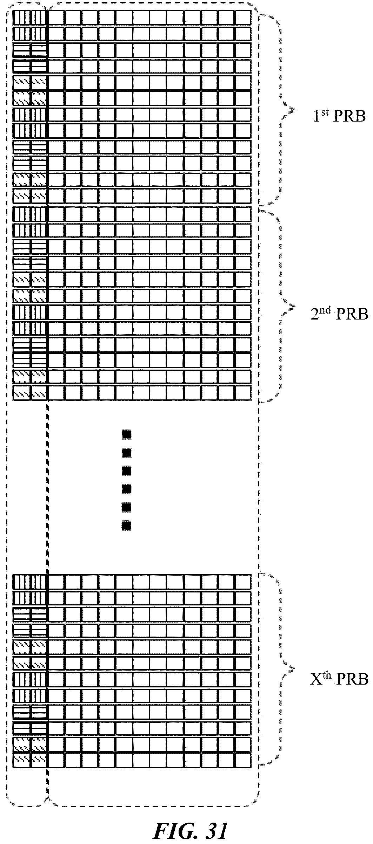

FIG. 31 is a schematic diagram of a PRB-based transmission according to an embodiment. In an embodiment, as shown in FIG. 31, if one transmission includes *X* number of PRBs, the 12 DMRSs (or 12 DMRS ports) in the DMRS set are as shown in the figure. Each DMRS has *2*×*X*number of RSEs. Therefore, channel values at equally spaced 2 ×*X*number of positions within the entire transmission bandwidth can be estimated, and then channel values of all 12 ×*X*number of subcarriers in the transmission bandwidth can be obtained by interpolation.

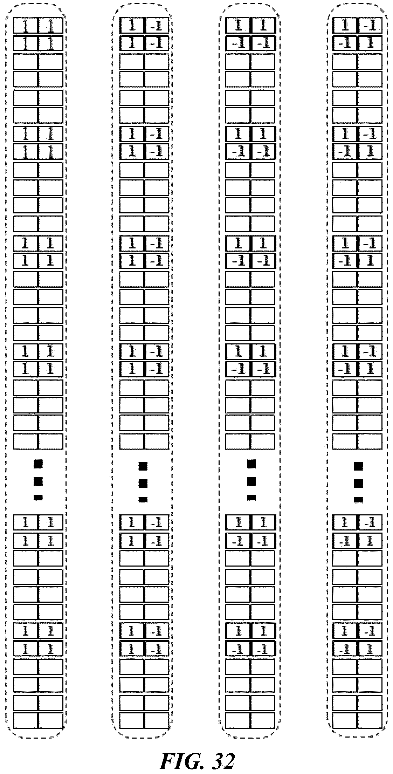

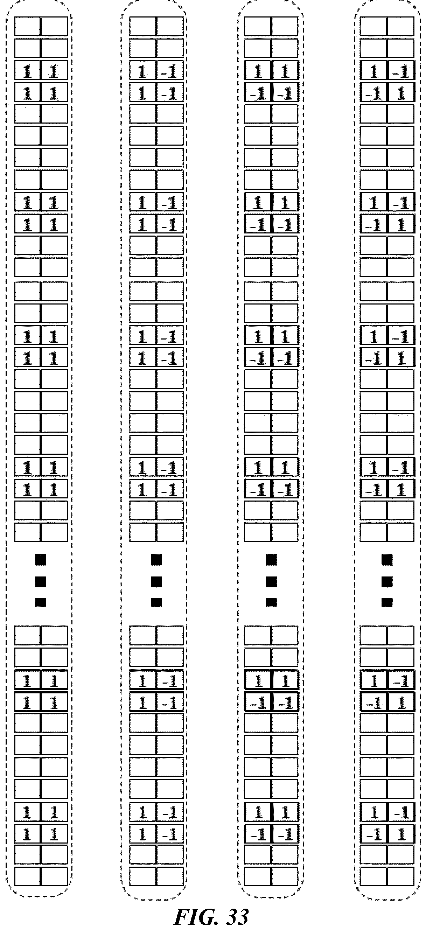

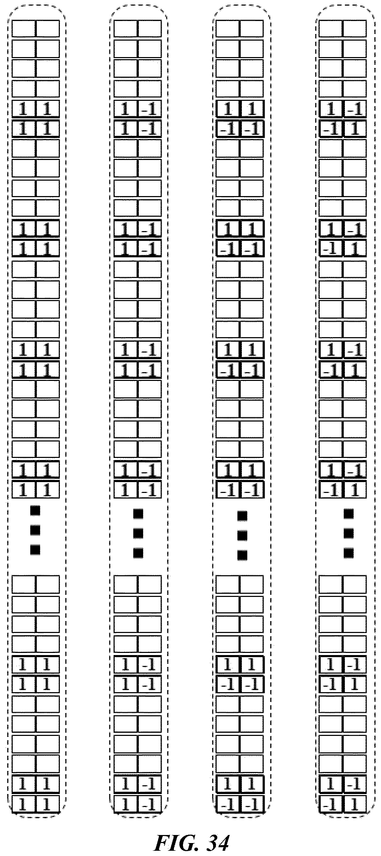

Based on the above embodiments, the 12 DMRSs may be divided into three groups according to positions of REs occupied by the DMRSs. FIG. 32 is another schematic diagram of a defined DMRS according to an embodiment. In FIG. 32, four DMRSs in the first group may be identified by OCCs. FIG. 33 is another schematic diagram of a defined DMRS according to an embodiment. In FIG. 33, four DMRSs in the second group may be identified by OCCs. FIG. 34 is another schematic diagram of a defined DMRS according to an embodiment. In FIG. 34, four DMRSs in the third group may be identified by OCCs.

It can be seen that in order to estimate a channel of each accessing terminal device over the entire transmission bandwidth, correlated DMRSs (or pilots) occupies a large number of resources. In other words, the DMRSs are dense to some extent within the entire transmission bandwidth and cannot be too sparse. In the embodiments shown in FIG. 26 to FIG. 34, the density of DMRSs within the entire transmission bandwidth is two DMRSs per PRB, or two RSEs per PRB.

For the system, the DMRSs account for 1/7 of overheads, i.e., only 12 DMRSs can be designed with 1/7 of system resources. For data transmission in the unconnected transmission state, the collision probability of reference signals independently selected by any two terminal devices is 1/12, which is very high. Therefore, correlated DMRSs severely limit the number of terminal devices that transmit data in the unconnected transmission state.

If a frequency offset needs to be estimated according to the reference signal, resources occupied by each reference signal will continue to increase, in other words, the density of each reference signal in the transmission signal will continue to increase. For example, if the reference signal is repeated again in time domain to estimate the frequency offset, the resources occupied by the reference signal are doubled, i.e., the reference signal accounts for 2/7 of resource overheads. In other words, in order to estimate the frequency selective channel and frequency offset, only 12 DMRSs can be designed with 2/7 of system resources. If the system needs to further cope with a timing offset, the resources occupied by the reference signal will continue to increase. For example, only 12 DMRSs can be designed with 3/7 or even 4/7 of system overheads. As only a small number of DMRSs (i.e., DMRSs ports) can be obtained with such high overheads, the collision probability of DMRSs is very high when the terminal devices transmit data in the unconnected state.

If the multipath channel changes faster in frequency domain, i.e., the frequency selective characteristic is more significant, the density of DMRSs in frequency domain will continue to increase, in order to ensure the precision of channel estimation. Each group of DMRSs has three RSEs within the bandwidth of each PRB (for example, there are three groups of four adjacent shaded cells), so there may be three estimates on each PRB and 3 ×*X*number of estimates on *X* number of PRBs. Then, channels of all subcarriers of the *X* number of PRBs may be obtained by linear interpolation. This reference signal also accounts for 1/7 of overheads of transmission resources, but only 8 DMRSs (8 DMRS ports) can be distinguished, which is less than the number of DMRSs defined above. It can be seen that the channel estimation capability is generally inversely proportional to the number of reference signals.

Therefore, the problem faced when the reference signal is applied to the unconnected transmission scenario is that the reference signal not only needs to estimate the frequency selective channel and the timing/frequency offset of the entire transmission channel, but also needs to identify the terminal devices. Therefore, time-frequency resources occupied by the reference signal are increased manyfold. As a result, the number of reference signals is too small in the case of fixed resources, affecting the number of terminal devices that can transmit information.

The present disclosure is mainly to greatly alleviate the task of reference signals, such that resources occupied by each reference signal can be minimized, i.e., the density of each reference signal in the transmission signal can be minimized, so the number of reference signals can be maximized. As such, the number of terminal devices that transmit information according to a pre-configured scheduling-free or contention-based scheduling-free method can be increased.

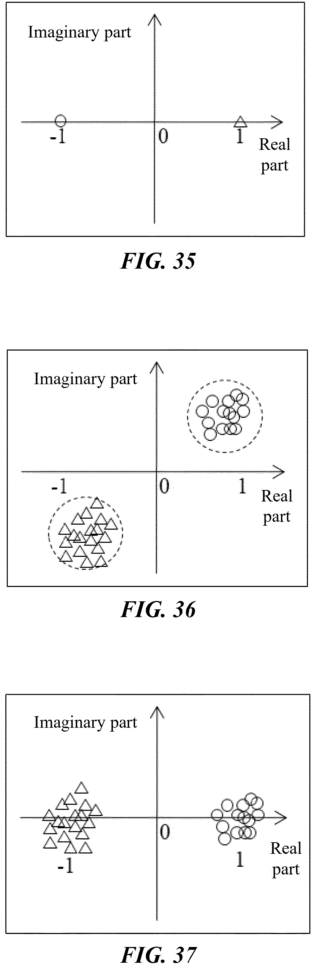

In the present disclosure, a channel estimation technology based on data (not based on reference signals) is used, and a channel of the entire transmission bandwidth and a timing/frequency offset are estimated according to characteristics of data, e.g., according to geometric characteristics of a constellation diagram of a data symbol. In other words, it is not necessary to estimate the channel of the entire transmission bandwidth and the timing/frequency offset according to the reference signals. Using channel estimation as an example, a block flat fading channel is used as an example for ease of description. The constellation diagram may be a constellation diagram of a BPSK symbol, e.g., a constellation diagram of a BPSK symbol transmitted by the terminal device as shown in FIG. 35, which may be considered a standard BPSK constellation diagram; or a constellation diagram of a BPSK symbol as shown in FIG. 36; or a constellation diagram of a BPSK symbol as shown in FIG. 37. As shown in FIG. 36, after a BPSK symbol arrives at a base station side through a wireless channel and a wireless receiver, it is no longer the standard BPSK constellation diagram shown in FIG. 35, but is scattered points of the symbol obtained by applying a weighting coefficient to the BPSK symbol through the wireless channel (i.e., rotation and scaling) and superimposing Additive White Gaussian Noise (AWGN) of the receiver. Therefore, FIG. 36 shows scattered points corresponding to the symbol after channel weighting, and channel weighting may be estimated by using the geometric shapes of the scattered points of the symbol.

Based on the above analysis, it can be seen that the constellation diagram after rotation and scaling (i.e., channel weighting) of a low-order modulated signal such as BPSK still has strong geometric characteristics, so channel estimation and equalization can use the geometric characteristics of the constellation diagram to estimate a rotation amount and a scaling amount. Then, the constellation diagram can be reversely rotated back to complete the equalization, to obtain symbol scatters after signal equalization, as shown in FIG. 37. As shown in FIG. 36, from scattered points corresponding to the symbol received by the base station, two clusters of separate scattered points can be observed. The base station may respectively add up circular scattered points and triangular scattered points to obtain two scattered point centers, then rotate the scattered point center corresponding to the triangular scattered points by 180°, and add the rotated scattered point center to the scattered point center corresponding to the circular scattered points, to obtain a final BPSK symbol. The BPSK symbol is channel weighting expressed in the form of a complex number, and the rotation amount and the scaling amount may also be obtained according to the channel weighting. An angle of the complex number is the rotation amount, and a modulus of the complex number is the scaling amount.

Therefore, the task of the reference signal in the scheme of the present disclosure is much smaller than that in related schemes, so resources occupied by each reference signal in the scheme of the present disclosure are less than those occupied by each reference signal in related schemes. Therefore, in the case of fixed overheads, the number of reference signals in the present disclosure is larger than the number of reference signals in related schemes.

On the other hand, when the base station has multiple receiving antennas, for example, R number of receiving antennas, the R number of receiving antennas can theoretically provide a very powerful spatial domain capability, thereby improving the performance of multi-terminal device access. In order to obtain this spatial domain capability, the present disclosure proposes that a "very sparse" reference signal may be used to estimate a spatial domain channel of a signal from each terminal device: *hₖ=[hₖ₁,hₖ₂,...,h_{kR}]^{t}*, where *t* represents a transpose operator; and then a spatial domain combining weight is obtained using the spatial channel, and spatial domain combining is performed on received signals of the R number of receiving antennas. Spatial domain combining is performed on a signal of a terminal device *k* to obtain a data symbol *sₖ*=*hₖ'*y*, where *y=[yₖ₁,yₖ₂,...y_{kR}]^{t}* represents the received signals of the *R* number of receiving antennas, *hₖ'* represents the conjugate transpose of *hₖ.* Then, a receiver estimates a channel over the entire transmission bandwidth of the signal of the terminal device k and estimates a timing/frequency offset by using the data symbol *sₖ* obtained through the spatial domain combining. Then, the channel and the timing/frequency offset are compensated for the data symbol *sₖ* obtained through the spatial domain combining. Finally, the data symbol for which the channel and the timing/frequency offset have been compensated is demodulated and decoded.

Therefore, in the present disclosure, the reference signal is not intended to estimate the channel in the entire transmission bandwidth, and is not used to estimate the timing/frequency offset.

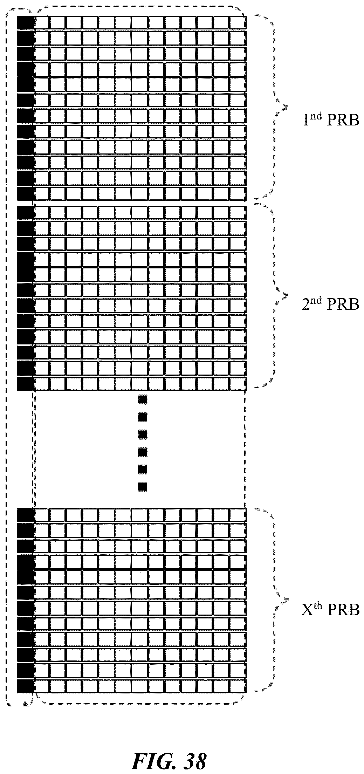

FIG. 38 is a schematic diagram of a defined reference signal. In an embodiment, it is assumed that the reference signal occupies one OFDM symbol, one transmission includes time-frequency resources of *X* number of PRBs, and each PRB includes 14 OFDM (or DFT-S-OFDM or SC-FDMA) symbols in time domain and 12 subcarriers in frequency domain. The first one OFDM symbol is used to carry a DMRS, i.e., the first one OFDM symbol is used as a very sparse pilot region. In this case, 1/14 of resources are used for transmitting the reference signal, i.e., 12 ×*X*number of REs are utilized for transmitting the reference signal. A region other than the very sparse pilot region is a data symbol region.

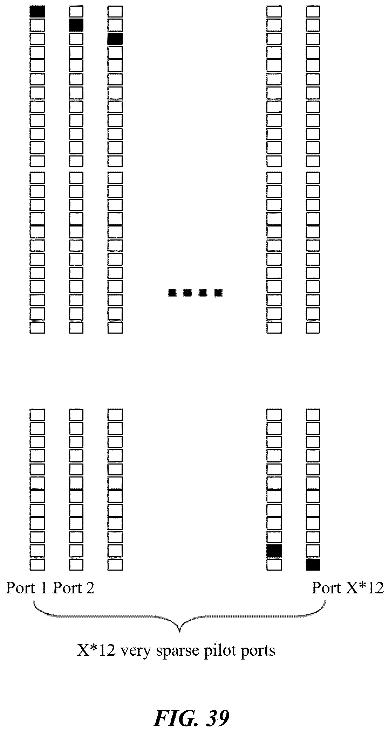

FIG. 39 is a schematic diagram of another system-defined reference signal (i.e., very sparse pilot). In an embodiment, as shown in FIG. 39, each reference signal has a non-zero-valued symbol (non-zero-valued signal, or useful signal) on only one RE, and there is no signal on the other REs (i.e., the value is "0"). Therefore, a DMRS region may account for 1/14 of overheads, and a total of "12×X"number of reference signals can be identified. If there are 6 PRBs, and each PRB accounts for 1/14 of resource overheads, 6×12=72 reference signals can be identified. The number of reference signals is much greater than the number of reference signals in an NR system (where the number of reference signals in the NR system is 8 or 12).

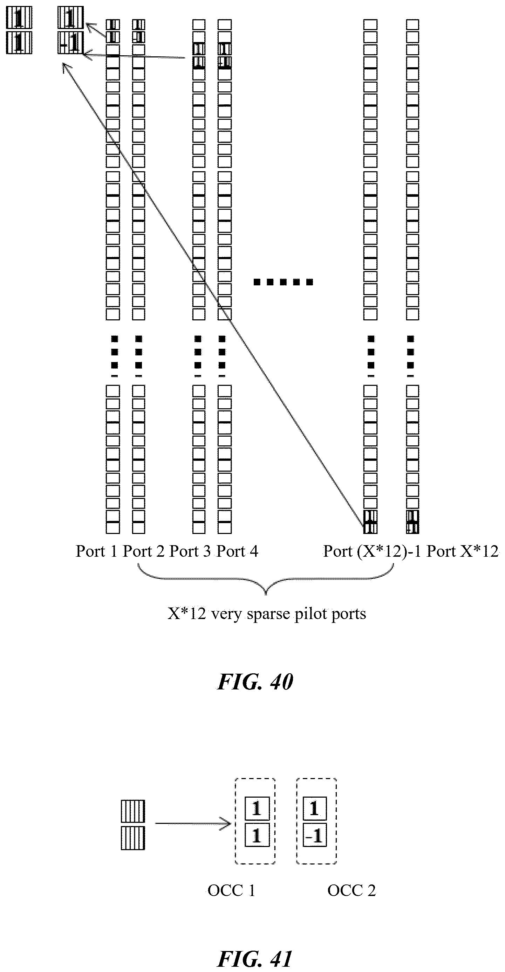

FIG. 40 is a schematic diagram of another defined reference signal (i.e., very sparse pilot). In an embodiment, as shown in FIG. 40, each system-defined reference signal has a non-zero-valued symbol (non-zero-valued signal, or useful signal) on only two REs, two reference signals may be distinguished by a 2-bit OCC for every two REs, and there is no signal on the other REs (i.e., the value is "0"). Therefore, a DMRS region may account for 1/14 of overheads, and a total of "12×X" number of reference signals can be distinguished. If there are 6 PRBs, and each PRB accounts for 1/14 of resource overheads, 6×12=72 reference signals can be distinguished. The number of reference signals is much greater than the number of reference signals in an NR system (where the number of reference signals in the NR system is 8 or 12). Therefore, the number of non-zero-valued symbols of the very sparse pilot is proportional to the number of PRBs.

FIG. 41 is a schematic diagram of generating a DMRS port according to an embodiment. In an embodiment, as shown in FIG. 41, different DMRS ports are generated by carrying different OCCs (such as OCC 1 and OCC 2) on two REs. In FIG. 41, the REs are represented by two cells filled with vertical lines. Therefore, a DMRS region may account for 1/14 of overheads, and a total of *12*×*X*number of reference signals can be distinguished. If there are 6 PRBs, and each PRB accounts for 1/14 of resource overheads, 6×12=72 reference signals can be distinguished. The number of reference signals is much greater than the number of reference signals in an NR system (where the number of reference signals in the NR system is 8 or 12).

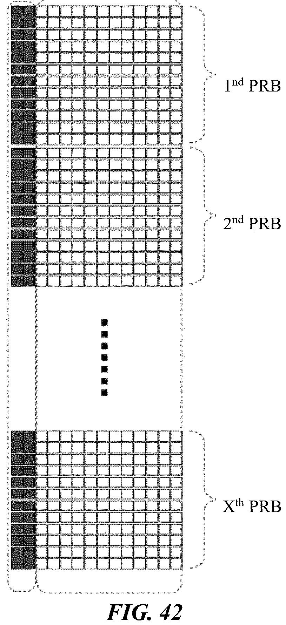

FIG. 42 is another schematic diagram of a defined reference signal according to an embodiment. In an embodiment, as shown in FIG. 42, the system-defined reference signal occupies two OFDM symbols.

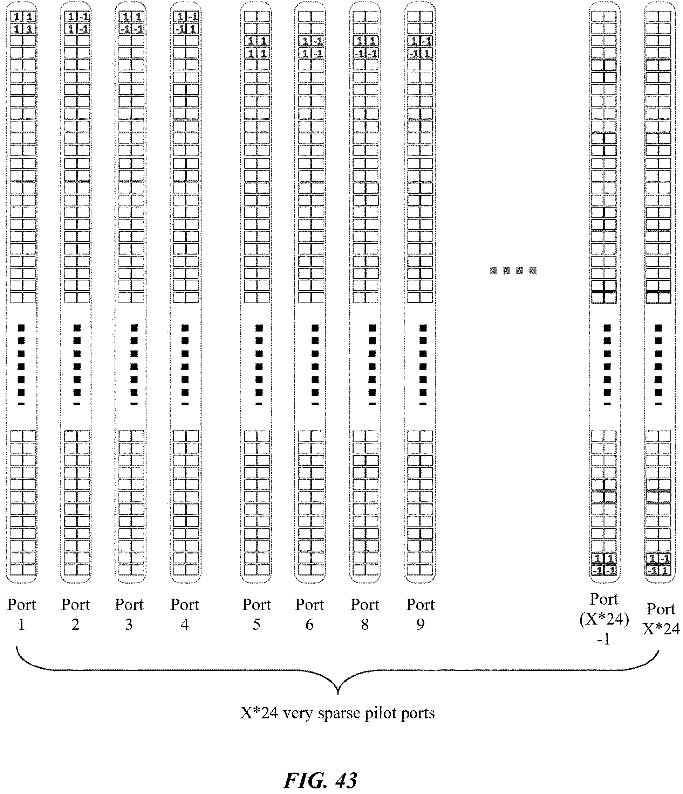

FIG. 43 is another schematic diagram of a defined reference signal according to an embodiment. In an embodiment, as shown in FIG. 43, each system-defined reference signal has a non-zero-valued symbol (non-zero-valued signal or useful signal) on only a group of four adjacent REs, but one group of four adjacent REs is multiplexed by four reference signals. Four reference signals multiplexing four adjacent REs in the same group may be distinguished by OCCs. Therefore, when one transmission includes X number of PRBs, and each PRB occupies 1/7 of overheads, a total of 24 ×*X*number of reference signals can be distinguished. If one transmission includes 6 PRBs, and each PRB occupies 1/7 of resource overheads, 6×12=144 reference signals can be distinguished. Therefore, the number of reference signals is much greater than the number of reference signals in an NR system (where the number of reference signals in the NR system is 8 or 12), and it also indicates that the number of very sparse pilots is proportional to the number of PRBs.

It should be noted that the numerical values shown in the embodiments of the present disclosure are provided by way of example only and are not intended to limit the present disclosure, and the values may be adjusted according to actual situations.

It can be seen that the very sparse pilot is a pilot having a small number of non-zero-valued elements in the preset pilot set, for example, only 1 to 4 non-zero-valued elements. Therefore, the scheme using the very sparse pilot can significantly increase the number of pilots without increasing pilot resource overheads, and thereby significantly reducing the probability of pilot collision. In addition, the base station may estimate part of information of the wireless channel according to the very sparse pilot, and does not need to estimate all the information of the wireless channel according to the very sparse pilot. Moreover, the base station may further extract channel information from data symbols, and implement equalization of the data symbols by using the channel information.

It should be noted that the very sparse pilot is only used for spatial domain combining, but cannot be used for channel equalization, so the very sparse pilot may be regarded as a reference signal for spatial domain combining, which is not particularly limited herein.

It should also be noted that although the very sparse reference signals (i.e., very sparse pilots) shown in FIG. 38, FIG. 39, FIG. 40, and FIG. 41 are all located on the first symbol of the transmission resource, or on the first symbol and the second symbol of the transmission resource, the position of the very sparse reference signal is not limited in the present disclosure. For example, the very sparse reference signal may also be located in the middle of the transmission resource.

In this embodiment, the independent plurality of pilots and the very sparse pilot may be used in combination to further reduce the probability of pilot collision and further increase the load of terminal devices.

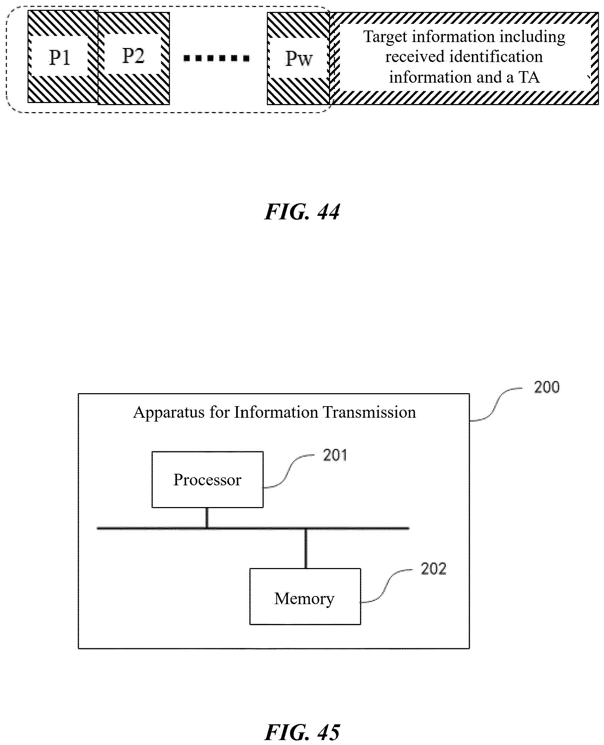

FIG. 44 is a schematic diagram of a very sparse reference signal according to an embodiment. In an embodiment, FIG. 44 is described using target information. In FIG. 44, a data packet includes target information including received identification information and a TA, *W* number of very sparse reference signals, and information of the W very sparse reference signals. The information of the *W* number of very sparse reference signals may be index numbers of the W very sparse reference signals, and *P1*, *P2,* ..., and Pw respectively represent different very sparse reference signals, which is not particularly limited herein. For example, after a data packet of a terminal device is successfully decoded, information of all the very sparse pilots used by the terminal device in this transmission can be learned, such that interference of the pilots can be eliminated.

It can be understood that the first communication node in all the above embodiments may be a terminal device, for example, a mobile terminal device such as a mobile phone, a smartphone, a notebook computer, a Personal Digital Assistant (PDA), a tablet computer (PAD), or a navigation device, or may be an IoT terminal device, etc., which is not particularly limited herein.

In addition, referring to FIG. 45, an embodiment of the present disclosure provides an information transmission apparatus 200. The information transmission apparatus 200 includes a memory 202, a processor 201, and a computer program stored in the memory 202 and executable by the processor 201.

The processor 201 and the memory 202 may be connected by a bus or in other ways.

The memory 202, as a non-transitory computer-readable storage medium, may be configured for storing a non-transitory software program and a non-transitory computer-executable program. In addition, the memory 202 may include a high-speed random access memory, and may also include a non-transitory memory, e.g., at least one magnetic disk storage device, flash memory device, or other non-transitory solid-state storage device. In some implementations, the memory 202 optionally includes memories located remotely from the processor 201, and the remote memories may be connected to the processor 201 via a network. Examples of the network include, but not limited to, the Internet, an intranet, a local area network, a mobile communication network, and combinations thereof.

The non-transitory software program and instruction required to implement the method for information transmission of the foregoing embodiments are stored in the memory 202 which, when executed by the processor 201, causes the processor 201 to implement the method for information transmission of the foregoing embodiments, for example, implement the operation S110 in FIG. 4, the operations S210 to S230 in FIG. 5, the operations S310 to S320 in FIG. 6, the operations S410 to S420 in FIG. 12, the operations S510 to S520 in FIG. 18, the operation S610 in FIG. 19, the operations S710 to S720 in FIG. 20, the operations S810 to S850 in FIG. 21, or the operations S910 to S920 in FIG. 22.

The device embodiments described above are merely illustrative. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing a computer-executable instruction which, when executed by a processor or controller, for example, by a processor in the device embodiment described above, may cause the processor to implement the method for information transmission of the foregoing embodiments, for example, implement the operation S110 in FIG. 4, the operations S210 to S230 in FIG. 5, the operations S310 to S320 in FIG. 6, the operations S410 to S420 in FIG. 12, the operations S510 to S520 in FIG. 18, the operation S610 in FIG. 19, the operations S710 to S720 in FIG. 20, the operations S810 to S850 in FIG. 21, or the operations S910 to S920 in FIG. 22.

In addition, an embodiment of the present disclosure provides a computer program product, including a computer program or a computer instruction stored in a computer-readable storage medium which, when read from the computer-readable storage medium and executed by a processor of a computer device, causes the computer device to implement the method for information transmission in the above embodiments, for example, implement the operation S110 in FIG. 4, the operations S210 to S230 in FIG. 5, the operations S310 to S320 in FIG. 6, the operations S410 to S420 in FIG. 12, the operations S510 to S520 in FIG. 18, the operation S610 in FIG. 19, the operations S710 to S720 in FIG. 20, the operations S810 to S850 in FIG. 21, or the operations S910 to S920 in FIG. 22.

Those having ordinary skill in the art can understand that all or some of the operations in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A method for information transmission, applied to a first communication node, the method comprising:
transmitting target information to a second communication node at a target transmission time, wherein the target transmission time is determined according to a pre-stored Timing Advance(TA), the target information comprises the TA, and identification information received by the first communication node, and the identification information comprises at least one of:
cell identification information;
base station identification information;
beam identification information; or
Wireless Access Point (WAP) identification information.

2. The method of claim 1, wherein in response to an inclusion of the WAP identification information in the identification information , the WAP identification information comprises one of:
cell-free communication system Access Point (AP) identification information;
Wireless Local Area Network (WLAN) AP identification information;
Wireless Wide Area Network (WWAN) AP identification information; or
Bluetooth AP identification information.

3. The method of claim 1, wherein:
in response to an inclusion of the cell identification information in the identification information , the target information further comprises a received wireless signal strength of the cell identification information received by the first communication node;
or
in response to an inclusion of the base station identification information in the identification information , the target information further comprises a received wireless signal strength of the base station identification information received by the first communication node;
or
in response to an inclusion of the beam identification information in the identification information , the target information further comprises a received wireless signal strength of the beam identification information received by the first communication node;
or
in response to an inclusion of the WAP identification information in the identification information , the target information further comprises a received wireless signal strength of the WAP identification information received by the first communication node.

4. The method of claim 1, wherein:
in response to an inclusion of the cell identification information in the identification information , the cell identification information comprises cell identifiers of a plurality of cells;
or
in response to an inclusion of the base station identification information in the identification information , the base station identification information comprises base station identifiers of a plurality of base stations;
or
in response to an inclusion of the beam identification information in the identification information , the beam identification information comprises beam identifiers of a plurality of beams;
or
in response to an inclusion of the WAP identification information in the identification information , the WAP identification information comprises identifiers of a plurality of WAPs.

5. The method of claim 1, wherein the TA is determined according to a broadcast signal sent by the second communication node.

6. The method of claim 5, wherein the broadcast signal comprises a downlink synchronization signal or a downlink reference signal.

7. The method of claim 1, wherein transmitting target information to the second communication node at the target transmission time comprises:
receiving broadcast signaling from the second communication node, wherein the broadcast signaling is indicative of a common channel shared by a plurality of first communication nodes to transmit the target information, wherein the plurality of first communication nodes comprise the first communication node; and
sending the target information to the second communication node over the common channel at the target sending time.

8. The method of claim 1, wherein transmitting target information to the second communication node at the target transmission time comprises:
determining a spreading sequence;
multiplying a modulated symbol formed by encoding and modulating the target information with the spreading sequence to obtain spread target information; and
transmitting the spread target information to the second communication node at the target transmission time.

9. The method of claim 8, wherein:
the spreading sequence is determined according to the target information;
or
the spreading sequence is determined from a preset sequence set according to a first number of pieces of bit information contained in the target information, wherein the preset sequence set comprises a second number of spreading sequences, and the first number and the second number are correlated by a logarithmic function with a base of 2.

10. The method of claim 1, wherein transmitting target information to the second communication node at the target transmission time comprises:
determining a plurality of pilots; and
transmitting the target information and each of the plurality of pilots to the second communication node at the target transmission time.

11. The method of claim 10, wherein the plurality of pilots are independent of each other.

12. The method of claim 10, wherein determining the plurality of pilots comprises one of:
determining the plurality of pilots according to the target information;
determining the plurality of pilots according to a plurality of pieces of bit information contained in the target information; or
determining the plurality of pilots from a preset pilot set according to a plurality of sets of a third number of pieces of bit information contained in the target information, wherein the preset pilot set comprises a fourth number of pilots, the third number and the fourth number are correlated by a logarithmic function with a base of 2.

13. The method of claim 10, wherein:
at least two of the plurality of pilots belong to different pilot sets;
or
at least two of the plurality of pilots have different pilot lengths.

14. The method of claim 10, wherein:
each of the plurality of pilots comprises a fifth number of non-zero-valued symbols, and the fifth number is greater than zero and less than five.

15. The method of claim 1, wherein transmitting target information to the second communication node at the target transmission time comprises:
determining one pilot, wherein the pilot comprises a sixth number of non-zero-valued symbols, and the sixth number is greater than zero and less than five; and
transmitting the target information and the pilot to the second communication node at the target transmission time.

16. The method of claim 1, wherein the target information comprises information related to an identity of the first communication node.

17. The method of claim 1, wherein the target information is prevented from comprising information related to an identity of the first communication node.

18. A method for information transmission, applied to a second communication node, the method comprising:
receiving target information sent by a first communication node at a target transmission time,
wherein the target transmission time is determined by the first communication node according to a pre-stored Timing Advance (TA), the target information comprises the TA, and identification information received by the first communication node, and the identification information comprises at least one of:
cell identification information;
base station identification information;
beam identification information; or
Wireless Access Point (WAP) identification information.

19. The method of claim 18, wherein in response to an inclusion of the WAP identification information in the identification information , the WAP identification information comprises one of:
cell-free communication system Access Point (AP) identification information;
Wireless Local Area Network (WLAN) AP identification information;
Wireless Wide Area Network (WWAN) AP identification information; or
Bluetooth AP identification information.

20. The method of claim 18, wherein:
in response to an inclusion of the cell identification information in the identification information , the target information further comprises a received wireless signal strength of the cell identification information received by the first communication node;
or
in response to an inclusion of the base station identification information in the identification information , the target information further comprises a received wireless signal strength of the base station identification information received by the first communication node;
or
in response to an inclusion of the beam identification information in the identification information , the target information further comprises a received wireless signal strength of the beam identification information received by the first communication node;
or
in response to an inclusion of the WAP identification information in the identification information , the target information further comprises a received wireless signal strength of the WAP identification information received by the first communication node.

21. The method of claim 18, wherein:
in response to an inclusion of the cell identification information in the identification information, the cell identification information comprises cell identifiers of a plurality of cells;
or
in response to an inclusion of the base station identification information in the identification information, the base station identification information comprises base station identifiers of a plurality of base stations;
or
in response to an inclusion of the beam identification information, the identification information, the beam identification information comprises beam identifiers of a plurality of beams;
or
in response to an inclusion of the WAP identification information in the identification information , the WAP identification information comprises identifiers of a plurality of WAPs.

22. The method of claim 18, wherein the TA is determined according to a broadcast signal sent by the second communication node.

23. The method of claim 22, wherein the broadcast signal comprises a downlink synchronization signal or a downlink reference signal.

24. The method of claim 18, wherein receiving target information sent by the first communication node at the target transmission time comprises:
transmitting broadcast signaling to the first communication node, wherein the broadcast signaling is indicative of a common channel shared by a plurality of first communication nodes to transmit the target information, and the plurality of first communication nodes comprise the first communication node; and
receiving the target information sent by the first communication node over the common channel at the target transmission time.

25. The method of claim 18, further comprising:
receiving a plurality of pilots from the first communication node;
determining, according to the plurality of pilots, channel information of a wireless channel through which the target information passes;
demodulating and decoding the target information according to the channel information;
reconstructing the pilots according to information of the pilots contained in the demodulated and decoded target information; and
eliminating the reconstructed pilots from a received signal.

26. The method of claim 25, wherein the plurality of pilots are independent of each other.

27. The method of claim 25, wherein:
at least two of the plurality of pilots belong to different pilot sets;
or
at least two of the plurality of pilots have different pilot lengths.

28. The method of claim 25, wherein:
each of the pilots comprises a fifth number of non-zero-valued symbols, the fifth number is greater than zero and less than five.

29. The method of claim 25, further comprising:
determining the target information corresponding to the first communication node according to a subset of the plurality of pilots that do not collide with each other; and
determining a location of the first communication node according to the target information.

30. The method of claim 18, further comprising:
receiving a pilot from the first communication node, wherein the pilot comprises a sixth number of non-zero-valued symbols, and the sixth number is greater than zero and less than five;
determining, according to the pilot, channel information of a wireless channel through which information from the first communication node passes; and
demodulating and decoding the target information of the first communication node according to the channel information.

31. An apparatus for information transmission, comprising: a memory, a processor, and a computer program stored in the memory and executable by the processor, wherein the computer program, when executed by the processor, causes the processor to perform the method of any one of claims 1 to 30.

32. A computer-readable storage medium, storing a computer-executable instruction which, when executed by a computer, causes the computer to perform the method of any one of claims 1 to 30.
